# FASCICULE DE BREVET EUROPEEN

(11) **EP 3 752 573 B1**
(45) Date de publication et mention de la délivrance du brevet: **05.03.2025**
(21) Numéro de dépôt: 19711645.2
(22) Date de dépôt: 13.02.2019
(51) Int. Cl.: C09K 5/04, C10M 171/00, C10M 105/38

(54) **COMPOSITIONS DE TRANSFERT DE CHALEUR EN REMPLACEMENT DU R-134A**
WÄRMETRANSFERZUSAMMENSETZUNGEN ALS ERSATZ FÜR R-134A
HEAT TRANSFER COMPOSITIONS AS REPLACEMENT FOR R-134A

(30) Priorité: 15.02.2018 FR 1851280
(43) Date de publication de la demande: 23.12.2020
(73) Titulaire: ARKEMA FRANCE, 92700 Colombes (FR)
(72) Inventeur: RACHED, Wissam, 92705 COLOMBES CEDEX (FR)
(74) Mandataire: Arkema Patent
(86) Numéro de dépôt international: PCT/FR2019/050316
(87) Numéro de publication internationale: WO 2019/158856

(56) Documents cités:
- WO-A1-2018/069621
- FR-A1- 2 964 975
- US-A1- 2016 333 241
- NAVARRO E ET AL: "Comparative experimental study of an open piston compressor working with R-1234yf, R-134a and R-290", INTERNATIONAL JOURNAL OF REFRIGERATION, ELSEVIER, PARIS, FR, vol. 36, no. 3, 24 November 2012 (2012-11-24), pages 768 - 775, XP029000337, ISSN: 0140-7007, DOI: 10.1016/J.IJREFRIG.2012.11.017
- BITZER: "Technical information. KT-510-6", BITZER, 8 December 2016 (2016-12-08), pages 1 - 24, XP055511192, Retrieved from the Internet <URL:https://www.gtex.nl/downloadfile.aspx?file=kt-510-6.pdf> [retrieved on 20181001]

## Description

### DOMAINE DE L'INVENTION

La présente invention concerne l'utilisation de compositions de transfert de chaleur comprenant du 2,3,3,3-tétrafluoropropène ainsi qu'un lubrifiant ester de polyol, notamment dans le contexte du remplacement des compositions de transfert de chaleur à base de 1,1,1,2-tétrafluoroéthane.

### ARRIERE-PLAN TECHNIQUE

Les problèmes posés par les substances appauvrissant la couche d'ozone atmosphérique ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbures (HCFC).

L'industrie de la réfrigération et de la climatisation a beaucoup investi dans la substitution des frigorigènes à base de CFC et HCFC, et c'est ainsi que les hydrofluorocarbures (HFC), peu ou pas nocifs pour la couche d'ozone, ont été commercialisés.

En particulier, le 1,1,1,2-tétrafluoroéthane (HFC-134a) est un exemple de HFC qui a connu une très large utilisation, par exemple dans la climatisation automobile.

Cependant, un grand nombre de fluides HFC, dont le HFC-134a, peuvent contribuer de manière néfaste à l'effet de serre. Cette contribution est quantifiée par un paramètre numérique, le GWP (Global Warming Potential ou potentiel de réchauffement climatique).

Les hydrofluorooléfines (HFO) telles que le 2,3,3,3-tétrafluoropropène (HFO-1234yf) ou le 1,3,3,3-tétrafluoropropène (HFO-1234ze) constituent des fluides à bas GWP qui sont susceptibles d'être utilisés dans les applications de transfert de chaleur.

Dans la plupart des applications, les fluides de transfert de chaleur sont utilisés dans des circuits de compression de vapeur. Le fluide subit ainsi une évaporation, suivie d'une compression, d'une condensation et d'une détente pour compléter le cycle.

L'utilisation d'un lubrifiant (ou huile de lubrification) est généralement nécessaire pour assurer le bon fonctionnement des pièces mécaniques mobiles dans le circuit, et notamment pour assurer la lubrification des paliers du compresseur.

Les esters de polyol (POE) ont en particulier été proposés comme lubrifiants possibles pour les HFO.

Le document WO 2009/124128 décrit un procédé de sélection d'un fluide de transfert de chaleur et d'un lubrifiant pour un système de compression de vapeur.

Le document WO 2010/083100 décrit des compositions de transfert de chaleur comprenant du dioxyde de carbone et un lubrifiant à base de POE.

L'article Analysis of LGWP Alternatives for Small Refrigeration (Plugin) Applications, de Yana Motta et al., dans International Refrigeration and Air Conditioning Conference at Purdue (2010) compare l'efficacité du HFO-1234yf et du HFO-1234ze dans des systèmes de réfrigération de petite taille.

Le document US 2012/024007 décrit un compresseur pour la réfrigération ou la climatisation chargé avec un fluide de transfert de chaleur qui peut être, entre autres, du HFO-1234yf, et un lubrifiant comprenant du POE.

Le document WO 2012/001255 décrit des compositions comprenant un lubrifiant à base de POE et un fluide de transfert de chaleur contenant au moins 99,8 % en poids de HFO-1234yf.

Le document US 8,685,271 décrit un groupe de POE et leur utilisation avec divers fluides de transfert de chaleur possibles.

Le document FR 2964975 décrit une composition comprenant un lubrifiant POE ou PVE et un fluide de transfert de chaleur de 1-99% en poids de HFO-1234yf et de 1-99% en poids trans- HFO-1234ze.

Le document WO 2018/069621 décrit l'utilisation d'une composition comprenant un lubrifiant POE et un fluide F comprenant au moins un tetrafluoropropène et au moins un hydrofluorocarbure dans un circuit de compression de vapeur comportant un séparateur d'huile.

Le document US 2016/333241 décrit le remplacement du R-410A par un hydrofluorocarbure insaturé avec un lubrifiant ayant des propriétés particulières telles que la rupture de voltage et la valeur OH.

L'article de Navarro et al. dans le Journal de réfrigération, Elsevier vol 3, no. 3 du 24 Nov. 2012 décrit une étude expérimentale comparative sur un compresseur à système ouvert fonctionnant avec du HFO-1234yf, HFC-134a et le propane.

L'article Lubricant Development To Meet Lower GWP Refrigerant Challenges, de J.A. Karnaz, dans 15th International Refrigeration and Air Conditioning Conference at Purdue (2014) s'intéresse à l'évaluation des lubrifiants pour les fluides de transfert de chaleur dits de prochaine génération, dont le HFO-1234ze.

L'article Convection-driven Absorption of R-1234yf in Lubricating Oil, de Neto et al. dans International Journal of Refrigeration 44:151-160 (2014) décrit la détermination du taux d'absorption du HFO-1234yf à travers la surface d'une couche de lubrifiant POE ISO VG 10 dans un système fermé.

Le document EP 2947136 décrit une huile de lubrification comportant une huile de base, un composé sulfure et un gallate. L'huile de base peut notamment être du POE. Cette huile de lubrification peut être utilisée, entre autres, avec du HFO-1234yf.

L'article Evaluating Lubricants for Lower GWP Refrigerant Compressor Operation, de J.A. Karnaz, dans 16th International Refrigeration and Air Conditioning Conference at Purdue (2015) s'intéresse à l'évaluation des lubrifiants pour un ensemble de fluides de transfert de chaleur, dont en particulier des mélanges contenant des HFO.

Le document US 2016/053153 décrit des compositions de transfert de chaleur comprenant un tétrafluoropropène et un lubrifiant à base de POE.

Le document WO 2016/209560 décrit des compositions de transfert de chaleur comprenant une oléfine fluorée et un lubrifiant à base de POE ayant une viscosité cinématique à 40°C de 150 à 360 cSt.

Il existe toujours un besoin de fournir des procédés de transfert de chaleur efficaces, notamment dans le contexte d'une substitution performante des compositions de transfert de chaleur à base de HFC-134a par des compositions de transfert de chaleur à bas GWP.

### RESUME DE L'INVENTION

L'invention concerne en premier lieu un procédé de transfert de chaleur au moyen d'une installation de transfert de chaleur utilisant un compresseur à scroll et contenant une composition de transfert de chaleur, la composition de transfert de chaleur comprenant :
- un fluide frigorigène, qui comprend du 2,3,3,3-tétrafluoropropène, et
- un lubrifiant ;

dans lequel le lubrifiant comprend un ester de polyol, la solubilité du 2,3,3,3-tétrafluoropropène dans le lubrifiant à 0°C et à une pression absolue de 2,2 bar étant inférieure à la solubilité du 1,1,1,2-tétrafluoroéthane dans le lubrifiant à 0°C et à une pression absolue de 2,0 bar ;
le procédé comprenant les étapes successives :
   - d'évaporation d'un fluide frigorigène ;
   - de surchauffe du fluide frigorigène de 1 à 10°C;
   - de compression du fluide frigorigène.

Dans certains modes de réalisation, la surchauffe du fluide frigorigène est de préférence de 2 à 10°C, de préférence encore de 3 à 5°C.

Dans certains modes de réalisation, le lubrifiant comprend un ester de dipentaérythritol.

Dans certains modes de réalisation, le lubrifiant présente une viscosité cinématique à 40°C de 10 à 200 cSt, de préférence de 20 à 100 cSt, et de préférence encore de 30 à 80 cSt.

Dans certains modes de réalisation, le procédé est un procédé de climatisation et/ou de chauffage mobile ou stationnaire, de réfrigération, de congélation ou de surgélation.

Dans certains modes de réalisation, l'évaporation du fluide frigorigène est effectuée à une température moyenne inférieure ou égale à 10°C, de préférence inférieure ou égale à 0°C, de préférence encore inférieure ou égale à -10°C.

Dans certains modes de réalisation, l'installation de transfert de chaleur est une installation prévue pour fonctionner avec une composition de transfert de chaleur initiale comprenant :
- un fluide frigorigène initial, et
- un lubrifiant initial,
la composition de transfert de chaleur initiale étant différente de la composition de transfert de chaleur utilisée dans le procédé.

Dans certains modes de réalisation, ladite composition de transfert de chaleur est une composition de transfert de chaleur de remplacement, qui est utilisée en remplacement d'une composition de transfert de chaleur initiale comprenant :
- un fluide frigorigène initial, et
- un lubrifiant initial.

Dans certains modes de réalisation, la surchauffe avec la composition de transfert de chaleur de remplacement est inférieure ou égale à la surchauffe lorsque le même procédé est mis en œuvre avec la composition de transfert de chaleur initiale ; et de préférence la surchauffe avec la composition de transfert de chaleur de remplacement est inférieure d'au moins 2°C, de préférence d'au moins 5°C, de préférence encore d'au moins 10°C, par rapport à la surchauffe lorsque le même procédé est mis en œuvre avec la composition de transfert de chaleur initiale.

Dans certains modes de réalisation, le lubrifiant de la composition de transfert de chaleur de remplacement est identique au lubrifiant initial.

Dans certains modes de réalisation, le lubrifiant de la composition de transfert de chaleur de remplacement est différent du lubrifiant initial.

Dans certains modes de réalisation, le lubrifiant de la composition de transfert de chaleur de remplacement a une viscosité cinématique à 40°C inférieure ou égale à la viscosité cinématique à 40°C du lubrifiant initial, la différence entre la viscosité cinématique à 40°C du lubrifiant initial et la viscosité cinématique à 40°C du lubrifiant de la composition de transfert de chaleur de remplacement étant de préférence supérieure ou égale à 5 cSt, de préférence encore supérieure ou égale à 10 cSt.

Dans certains modes de réalisation, le lubrifiant initial comprend un ester de polyol, et de préférence comprend un ester de dipentaérythritol.

Dans certains modes de réalisation, le fluide frigorigène initial comprend du 1,1,1,2-tetrafluoroéthane ou consiste essentiellement en du 1,1,1,2-tetrafluoroéthane.

La présente invention permet de répondre au besoin exprimé ci-dessus. Elle fournit plus particulièrement des procédés de transfert de chaleur efficaces, notamment dans le contexte d'une substitution performante des compositions de transfert de chaleur à base de HFC-134a par des compositions de transfert de chaleur à bas GWP.

L'invention repose sur la constatation que le HFO-1234yf est relativement peu soluble dans certaines huiles POE (et notamment dans les huiles POE du même type que l'huile POE ISO 55), c'est-à-dire moins soluble que le HFO-1234ze et que le fluide de référence HFC-134a.

L'utilisation de telles huiles en combinaison avec le HFO-1234yf permet de remplacer des compositions de transfert de chaleur comprenant du HFC-134a de manière particulièrement efficace, dans les procédés de transfert de chaleur faisant intervenir une surchauffe après l'évaporation.

Par exemple, dans le contexte du remplacement d'une composition contenant du HFC-134a par une composition contenant du HFO-1234yf, il est possible, d'obtenir les bénéfices suivants :
- une réduction de la surchauffe à l'évaporation lors du remplacement ; ou
- une réduction de la viscosité du lubrifiant lors du remplacement ;

**Il** est bien entendu possible de combiner ces deux aspects.

Dans une installation de transfert de chaleur, le lubrifiant est principalement présent dans le compresseur, pour la lubrification des parties mobiles. Une fraction du lubrifiant peut toutefois être entraînée hors du compresseur et ainsi circuler dans l'ensemble du circuit contenant le fluide frigorigène.

Un premier bénéfice de l'invention concerne la réduction de la surchauffe lors du changement de composition de transfert de chaleur.

La surchauffe du fluide frigorigène après l'évaporation permet :
- de limiter la présence de fluide frigorigène sous forme liquide dans le compresseur (la compression de liquide étant une cause majeure de panne des compresseurs) ;
- de diminuer la solubilité du fluide frigorigène dans l'huile dans le compresseur et ainsi d'éviter le moussage et donc à nouveau la compression de liquide surtout au démarrage ;
- de limiter la perte de viscosité de l'huile quand elle est en contact avec le fluide frigorigène, cette perte de viscosité étant néfaste pour la lubrification des paliers et des pièces en mouvement dans le compresseur ; et
- de faciliter la séparation du fluide frigorigène et du lubrifiant à la sortie du compresseur.

D'un autre côté, la présence de la surchauffe a pour conséquence de réduire les performances du système.

De par le choix d'un lubrifiant de type POE dans lequel le HFO-1234yf est peu soluble (en comparaison du fluide de référence HFC-134a), la viscosité du lubrifiant est relativement peu affectée en présence du HFO-1234yf dans le compresseur. Cela permet de réduire la surchauffe, et ainsi d'augmenter les performances, sans entraîner de conséquences négatives sur la prévention du moussage, sur la lubrification ou sur la séparation du lubrifiant et du fluide frigorigène.

La réduction de la surchauffe est particulièrement bénéfique lorsque le procédé est mis en œuvre pour la climatisation.

Un deuxième bénéfice de l'invention concerne l'utilisation d'une huile de viscosité inférieure, afin de diminuer les forces de frottement sur les paliers du compresseur par rapport à une huile de référence, surtout dans les zones ou l'huile n'est pas en mélange avec les réfrigérants. Or la puissance consommée par palier de lubrification est proportionnelle à la viscosité du lubrifiant.

La réduction de la viscosité de l'huile permet également d'améliorer la lubrification au démarrage de l'installation (ce qui peut permettre de limiter la consommation énergétique liée au chauffage du compresseur lors de ce démarrage) ; et de limiter les pertes de charge dans le circuit et donc de réduire la consommation énergétique liée au pompage.

Ainsi, un objet de l'invention est l'utilisation, en tant que composition de transfert de chaleur de remplacement, d'une composition comprenant :
- un fluide frigorigène de remplacement comprenant du 2,3,3,3-tétrafluoropropène, et
- un lubrifiant de remplacement comprenant un ester de polyol ;

à la place d'une composition de transfert de chaleur initiale comprenant :
   - un fluide frigorigène initial comprenant du 1,1,1,2-tetrafluoroéthane, et
   - un lubrifiant initial ;
dans un procédé de transfert de chaleur comprenant les étapes successives :
   - d'évaporation d'un fluide frigorigène ;
   - de surchauffe du fluide frigorigène ;
   - de compression du fluide frigorigène ;
dans lequel la surchauffe lorsque le procédé est mis en œuvre avec la composition de transfert de chaleur de remplacement est inférieure à la surchauffe lorsque le procédé est mis en œuvre avec la composition de transfert de chaleur initiale.

Un autre objet de l'invention est l'utilisation, en tant que composition de transfert de chaleur de remplacement, d'une composition comprenant :
- un fluide frigorigène de remplacement comprenant du 2,3,3,3-tétrafluoropropène et
- un lubrifiant de remplacement comprenant un ester de polyol ;

à la place d'une composition de transfert de chaleur initiale comprenant :
   - un fluide frigorigène initial comprenant du 1,1,1,2-tetrafluoroéthane et
   - un lubrifiant initial ;
dans un procédé de transfert de chaleur ;
le lubrifiant de remplacement ayant une viscosité cinématique à 40°C inférieure à la viscosité cinématique à 40°C du lubrifiant initial.

### BREVE DESCRIPTION DES FIGURES

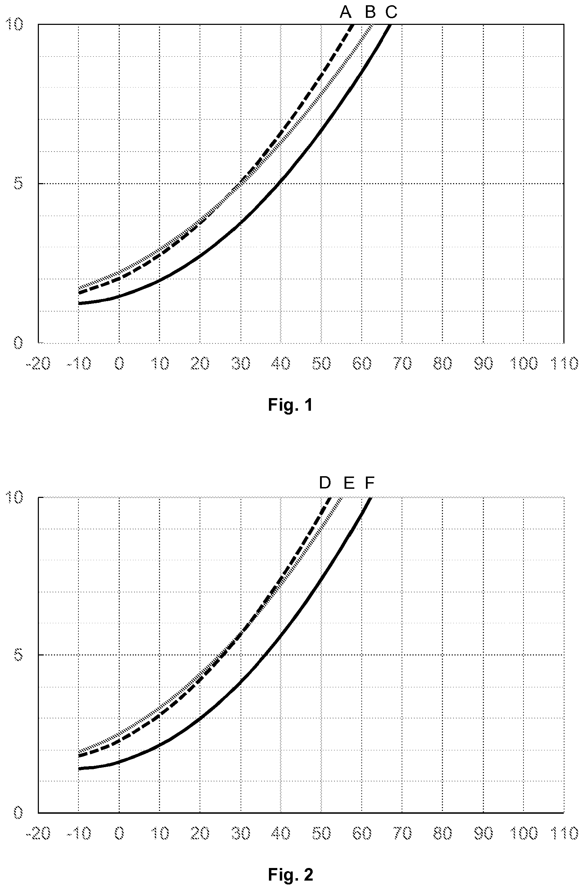

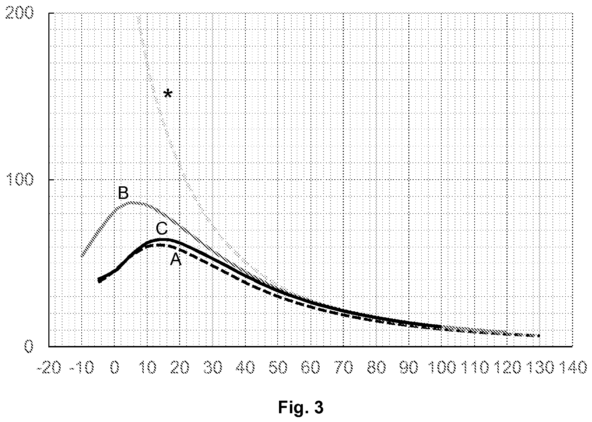

La **figure 1** représente la pression à l'entrée du compresseur (en bar, en ordonnées) en fonction de la température à l'entrée du compresseur (en °C, en abscisse), pour trois mélanges fluide frigorigène / lubrifiant A, B et C comme décrit plus en détail dans la partie exemples.
**La** **figure 2** représente la pression à l'entrée du compresseur (en bar, en ordonnées) en fonction de la température à l'entrée du compresseur (en °C, en abscisse), pour trois mélanges fluide frigorigène / lubrifiant D, E et F comme décrit plus en détail dans la partie exemples.
**La** **figure 3** représente la viscosité cinématique (en cSt, en ordonnées) en fonction de la température à l'entrée du compresseur (en °C, en abscisse), pour trois mélanges fluide frigorigène / lubrifiant A, B et C comme décrit plus en détail dans la partie exemples.

### DESCRIPTION DE MODES DE REALISATION DE L'INVENTION

L'invention est maintenant décrite plus en détail et de façon non limitative dans la description qui suit. Sauf mention contraire, dans l'ensemble de la demande, les proportions de composés indiquées sont données en pourcentages massiques.

L'invention concerne un procédé de transfert de chaleur mis en œuvre au moyen d'une installation de transfert de chaleur. L'installation contient une composition de transfert de chaleur.

Dans certains modes de réalisation, l'installation de transfert de chaleur était à l'origine conçue pour fonctionner avec une autre composition de transfert de chaleur, dite composition de transfert de chaleur dite initiale (et notamment avec un autre fluide frigorigène, dit fluide frigorigène initial).

Dans certains modes de réalisation, la composition de transfert de chaleur utilisée dans le procédé de l'invention est une composition de transfert de chaleur dite de remplacement, c'est-à-dire que la même installation de transfert de chaleur était préalablement utilisée pour mettre en œuvre un procédé de transfert de chaleur avec une autre composition de transfert de chaleur, dite composition de transfert de chaleur dite initiale.

Les deux paragraphes précédents correspondent à l'hypothèse d'un remplacement.

Dans ce cas, la composition de transfert de chaleur initiale consiste en un fluide frigorigène dit initial, un lubrifiant dit initial, et des additifs éventuels.

La composition de transfert de chaleur de remplacement consiste en un fluide frigorigène dit de remplacement, un lubrifiant dit de remplacement, et des additifs éventuels.

Par « *fluide frigorigène* » ou *« fluide de transfert de chaleur »,* on entend un fluide susceptible d'absorber de la chaleur en s'évaporant à basse température et basse pression et de rejeter de la chaleur en se condensant à haute température et haute pression, dans un circuit de compression de vapeur, selon l'application considérée. De manière générale, un fluide frigorigène peut consister essentiellement en un seul composé ou être un mélange de plusieurs composés.

Le fluide frigorigène de remplacement est différent du fluide frigorigène initial.

Dans certains modes de réalisation, le lubrifiant de remplacement est identique au lubrifiant initial.

Dans d'autres modes de réalisation, le lubrifiant de remplacement est différent du lubrifiant initial.

Le terme *« lubrifiant »* est utilisé de manière synonyme à *« huile de lubrification* » ou « *huile ».*

Dans certains modes de réalisation, le procédé de l'invention comprend successivement :
- une mise en œuvre avec la composition de transfert de chaleur initiale ;
- le remplacement de la composition de transfert de chaleur initiale par la composition de transfert de chaleur de remplacement ; et
- une mise en œuvre avec la composition de transfert de chaleur de remplacement.

Dans d'autres modes de réalisation, l'installation est directement mise en œuvre avec la composition de transfert de chaleur de remplacement, sans être mise en œuvre avec la composition de transfert de chaleur initiale - et ce, bien qu'elle soit, de par sa conception originelle, adaptée pour fonctionner avec la composition de transfert de chaleur initiale.

Cette hypothèse est, par extension, aussi considérée comme un cas de *« remplacement »* au sens de l'invention.

### Présentation générale du procédé de transfert de chaleur

Le procédé de transfert de chaleur de l'invention est mis en œuvre dans une installation de transfert de chaleur. L'installation de transfert de chaleur comporte un système de compression de vapeur. Le système contient une composition de transfert de chaleur, qui assure le transfert de chaleur.

Dans certains modes de réalisation, l'installation contient :
- initialement, la composition de transfert de chaleur initiale ;
- puis, après remplacement, la composition de transfert de chaleur de remplacement.

Le procédé de transfert de chaleur peut être un procédé de chauffage ou de refroidissement d'un fluide ou d'un corps.

Dans certains modes de réalisation, le système de compression de vapeur est :
- un système de climatisation ; ou
- un système de réfrigération ; ou
- un système de congélation ; ou
- un système de pompe à chaleur.

L'installation peut être mobile ou stationnaire.

Ainsi, le procédé de transfert de chaleur peut être un procédé de climatisation stationnaire (dans des locaux d'habitation ou dans des locaux industriels ou commerciaux), ou de climatisation mobile, notamment automobile, un procédé de réfrigération stationnaire, ou de réfrigération mobile (par exemple de transport frigorifique), ou un procédé de congélation ou surgélation stationnaire, ou de congélation ou surgélation mobile (par exemple de transport frigorifique), ou un procédé de chauffage stationnaire, ou de chauffage mobile (par exemple automobile).

Le procédé de transfert de chaleur comprend avantageusement les étapes suivantes, mises en œuvre de manière cyclique :
- l'évaporation du fluide frigorigène dans un évaporateur ;
- la compression du fluide frigorigène dans un compresseur ;
- la condensation du fluide frigorigène dans un condenseur ; et
- la détente du fluide frigorigène dans un module d'expansion.

L'évaporation du fluide frigorigène peut être effectuée à partir d'une phase liquide ou d'une phase diphasique liquide / vapeur.

Le compresseur peut être hermétique, semi-hermétique ou ouvert. Les compresseurs hermétiques comprennent une partie moteur et une partie compression qui sont confinées dans une enceinte hermétique non démontable. Les compresseurs semi-hermétiques comprennent une partie moteur et une partie compression qui sont directement assemblées l'une contre l'autre. L'accouplement entre la partie moteur et la partie compression est accessible en dissociant les deux parties par démontage. Les compresseurs ouverts comprennent une partie moteur et une partie compression qui sont séparées. Ils peuvent fonctionner par entraînement par courroie ou par accouplement direct.

Dans l'installation qui est utilisée, le compresseur peut être entraîné par un moteur électrique ou par une turbine à gaz (par exemple alimentée par les gaz d'échappement d'un véhicule, pour les applications mobiles) ou par engrenage.

L'évaporateur et le condenseur sont des échangeurs de chaleur. **Il** est possible d'utiliser tout type d'échangeur de chaleur dans l'invention, et notamment des échangeurs de chaleur à co-courant ou, de préférence, des échangeurs de chaleur à contre-courant.

Par « *échangeur de chaleur à contre-courant »,* on entend un échangeur de chaleur dans lequel de la chaleur est échangée entre un premier fluide et un deuxième fluide, le premier fluide à l'entrée de l'échangeur échangeant de la chaleur avec le deuxième fluide à la sortie de l'échangeur, et le premier fluide à la sortie de l'échangeur échangeant de la chaleur avec le deuxième fluide à l'entrée de l'échangeur.

Par exemple, les échangeurs de chaleur à contre-courant comprennent les dispositifs dans lesquels le flux du premier fluide et le flux du deuxième fluide sont dans des directions opposées, ou quasiment opposées. Les échangeurs fonctionnant en mode courant croisé à tendance contre-courant sont également compris parmi les échangeurs de chaleur à contre-courant.

L'installation peut également éventuellement comprendre au moins un circuit de fluide caloporteur utilisé pour transporter la chaleur (avec ou sans changement d'état) entre le circuit de la composition de transfert de chaleur et le fluide ou corps à chauffer ou refroidir.

L'installation peut également éventuellement comprendre deux circuits de compression de vapeur (ou plus), contenant des compositions de transfert de chaleur identiques ou distinctes. Par exemple, les circuits de compression de vapeur peuvent être couplés entre eux.

Selon l'invention, le fluide frigorigène est surchauffé entre l'évaporation et la compression, c'est-à-dire qu'il est porté à une température supérieure à la température de fin d'évaporation, entre l'évaporation et la compression.

Par *« température de début d'évaporation »,* on entend la température du fluide frigorigène à l'entrée de l'évaporateur.

Par *« température de fin d'évaporation »,* on entend la température du fluide frigorigène lors de l'évaporation de la dernière goutte de fluide frigorigène sous forme liquide (température de vapeur saturante ou température de rosée).

Lorsque le fluide frigorigène est un corps pur ou un mélange azéotropique, la température de début d'évaporation est égale à la température de fin d'évaporation.

Par *« température moyenne d'évaporation »,* on entend la moyenne arithmétique entre la température de début d'évaporation et la température de fin d'évaporation.

On désigne par *« surchauffe »* (équivalent ici à *« surchauffe à l'évaporateur »)* le différentiel de température entre la température maximale atteinte par le fluide frigorigène avant la compression (c'est-à-dire la température maximale atteinte par le fluide frigorigène à l'issue de l'étape de surchauffe) et la température de fin d'évaporation. Cette température maximale est en général la température du fluide frigorigène à l'entrée du compresseur. Elle peut correspondre à la température du fluide frigorigène à la sortie de l'évaporateur. Alternativement, le fluide frigorigène peut être au moins en partie surchauffé entre l'évaporateur et le compresseur (par exemple au moyen d'un échangeur interne). La surchauffe peut être ajustée par un réglage adéquat des paramètres de l'installation, et notamment par un réglage du module d'expansion. Dans le procédé de l'invention, la surchauffe est strictement supérieure à 0°C.

Le module d'expansion peut être une vanne thermostatique appelée détendeur thermostatique ou électronique à un ou plusieurs orifices, ou un détendeur pressostatique qui règle la pression. Il peut également s'agir d'un tube capillaire dans lequel la détente du fluide est obtenue par la perte de charge dans le tube. Le module d'expansion peut encore être une turbine pour produire du travail mécanique (qui peut être converti en électricité), ou une turbine couplée directement ou indirectement au compresseur.

Dans certains modes de réalisation, l'invention prévoit le remplacement d'une composition de transfert de chaleur initiale par une composition de transfert de chaleur de remplacement, dans le procédé de transfert de chaleur.

Dans certains modes de réalisation, ce remplacement peut être effectué en vidant, de préférence en totalité ou essentiellement en totalité, le fluide frigorigène initial de l'installation, et en introduisant le fluide frigorigène de remplacement à la place de celui-ci, dans l'installation - et ce sans vider (ou sans vider totalement) le lubrifiant initial. Dans ce cas, le lubrifiant de remplacement peut être le lubrifiant initial lui-même.

Dans certains modes de réalisation, ce remplacement peut être effectué en vidant, de préférence en totalité ou essentiellement en totalité, la composition de transfert de chaleur initiale de l'installation, et en introduisant la composition de transfert de chaleur de remplacement à la place de celle-ci, dans l'installation. Dans ce cas, de préférence le lubrifiant de remplacement est différent du lubrifiant initial.

On considère que le *« même »* procédé est mis en œuvre, avec la composition de transfert de chaleur initiale d'une part, et avec la composition de transfert de chaleur de remplacement d'autre part.

De préférence, avant et après remplacement, le procédé fonctionne ainsi :
- avec une même température moyenne d'évaporation ; et
- avec une même température moyenne de condensation.

Ni le compresseur, ni les échangeurs de chaleur, ni le module d'expansion ne sont remplacés, lors du remplacement.

Le réglage de ces éléments peut être optionnellement modifié lors du remplacement, afin de garantir que les températures moyennes d'évaporation et de condensation restent les mêmes.

Dans certains modes de réalisation, seul le réglage du module d'expansion est modifié.

Dans d'autres modes de réalisation, aucun réglage n'est modifié.

La température moyenne de condensation est définie comme étant la moyenne arithmétique entre la température de début de condensation (température du fluide frigorigène dans le condenseur lors de l'apparition de la première goutte liquide de fluide frigorigène, appelée température de saturation vapeur ou température de rosée) et la température de fin de condensation (température du fluide frigorigène lors de la condensation de la dernière bulle de fluide frigorigène sous forme gazeuse, appelée température de saturation liquide ou température de bulle).

On désigne par *« sous-refroidissement »* l'éventuel différentiel de température (en valeur absolue) entre la température minimale atteinte par le fluide frigorigène avant la détente et la température de fin de condensation. Généralement cette température minimale correspond à la température du fluide frigorigène à l'entrée du module d'expansion. Elle peut correspondre à la température du fluide frigorigène à la sortie du condenseur. Alternativement, le fluide frigorigène peut être au moins en partie sous-refroidi entre le condenseur et le module d'expansion (par exemple au moyen d'un échangeur interne).

De préférence, dans le procédé de l'invention, un sous-refroidissement (strictement supérieur à 0°C) est appliqué, de préférence un sous-refroidissement de 1 à 15°C, de préférence encore de 2 à 12°C et de préférence encore de 5 à 10°C.

L'invention est particulièrement utile lorsque la température moyenne d'évaporation est inférieure ou égale à 10°C ; ou inférieure ou égale à 5°C ; ou inférieure ou égale à 0°C ; ou inférieure ou égale à -5°C ; ou inférieure ou égale à -10°C.

Ainsi, l'invention est particulièrement utile pour la mise en œuvre d'un procédé de réfrigération à basse température, ou de refroidissement à température modérée, ou de chauffage à température modérée.

Dans des procédés de « *réfrigération à basse température »,* la température moyenne d'évaporation est de préférence de -45°C à -15°C, notamment de -40°C à -20°C, de manière plus particulièrement préférée de -35°C à -25°C et par exemple d'environ -30°C ; et la température moyenne de condensation est de préférence de 25°C à 80°C, notamment de 30°C à 60°C, de manière plus particulièrement préférée de 35°C à 55°C et par exemple d'environ 40°C. Ces procédés comprennent notamment les procédés de congélation et de surgélation.

Dans des procédés de *« refroidissement à température modérée »,* la température moyenne d'évaporation est de préférence de -20°C à 10°C, notamment de -15°C à 5°C, de manière plus particulièrement préférée de -10°C à 0°C et par exemple d'environ -5°C ; et la température moyenne de condensation est de préférence de 25°C à 80°C, notamment de 30°C à 60°C, de manière plus particulièrement préférée de 35°C à 55°C et par exemple d'environ 50°C. Ces procédés peuvent être notamment des procédés de réfrigération ou de climatisation.

Dans des procédés de « *chauffage à température modérée »,* la température moyenne d'évaporation est de préférence de -20°C à 10°C, notamment de -15°C à 5°C, de manière plus particulièrement préférée de -10°C à 0°C et par exemple d'environ -5°C ; et la température moyenne de condensation est de préférence de 25°C à 80°C, notamment de 30°C à 60°C, de manière plus particulièrement préférée de 35°C à 55°C et par exemple d'environ 50°C.

### Fluides frigorigènes

Lorsque l'invention est appliquée au remplacement d'une composition de transfert de chaleur initiale, le fluide frigorigène initial peut être tout fluide frigorigène, par exemple un fluide frigorigène comprenant un CFC, ou un HCFC, ou un HFC. Le fluide frigorigène initiale peut en particulier avoir un GWP supérieur ou égal à 150, ou supérieur ou égal à 500, ou supérieur ou égal à 1000.

Dans certains modes de réalisation, le fluide frigorigène initial comprend du HFC-134a.

Dans certains modes de réalisation, le fluide frigorigène initial comprend au moins 10 % de HFC-134a, ou au moins 20 % de HFC-134a, ou au moins 30 % de HFC-134a, ou au moins 40 % de HFC-134a, ou au moins 50 % de HFC-134a, ou au moins 60 % de HFC-134a, ou au moins 70 % de HFC-134a, ou au moins 80 % de HFC-134a, ou au moins 90 % de HFC-134a, ou au moins 95 % de HFC-134a, par rapport à la masse totale du fluide frigorigène initial.

Dans certains modes de réalisation, le fluide frigorigène initial consiste essentiellement, ou consiste en du HFC-134a (aux impuretés près).

Dans d'autres modes de réalisation, le fluide frigorigène initial comprend du HFC-134a en mélange avec un ou plusieurs composés de transfert de chaleur, et de préférence un ou plusieurs hydrofluorocarbures et/ou hydrocarbures.

Par *« hydrofluorocarbures »,* on entend dans le cadre de la présente demande les hydrofluorocarbures saturés, qui ne sont pas des hydrofluorooléfines.

Parmi les hydrofluorocarbures, on peut citer notamment le difluorométhane (HFC-32), le pentafluoroéthane (HFC-125), le 1,1,2,2-tétrafluoroéthane (HFC-134), le 1,1-difluoroéthane (HFC-152a), le fluoroéthane (HFC-161), le 1,1,1,2,3,3,3-heptafluoropropane (HFC-227ea), le 1,1,1-trifluoropropane (HFC-263fb), et leurs mélanges.

De préférence, le fluide frigorigène initial est dépourvu d'hydrofluorooléfines et d'hydrochlorofluorooléfines.

Dans certains modes de réalisation, le fluide frigorigène initial est une composition binaire (consistant en deux composés) ou ternaire (consistant en trois composés) ou quaternaire (consistant en quatre composés) ou quinquénaire (consistant en cinq composés).

Des exemples de mélanges pouvant constituer le fluide frigorigène initial sont le R-407A, le R-407B, le R-407C, le R-407D, le R-407E, le R-407F, le R-421A, le R-421B, le R-422A, le R-422B, le R-422C, le R-422D, le R-424A, le R-425A, le R-426A et le R-427A.

Des impuretés peuvent être présentes ou non dans de tels fluides frigorigènes. Lorsqu'elles sont présentes, elles peuvent représenter moins de 1 %, de préférence moins de 0,5 %, de préférence moins de 0,1 %, de préférence moins de 0,05 % et de préférence moins de 0,01 % (en masse) dudit fluide.

Le fluide frigorigène utilisé pour mettre en œuvre le procédé de l'invention, qui est le fluide frigorigène de remplacement si un remplacement est effectué, comprend du HFO-1234yf.

Dans certains modes de réalisation, ce fluide frigorigène comprend au moins 10 % de HFO-1234yf, ou au moins 20 % de HFO-1234yf, ou au moins 30 % de HFO-1234yf, ou au moins 40 % de HFO-1234yf, ou au moins 50 % de HFO-1234yf, ou au moins 60 % de HFO-1234yf, ou au moins 70 % de HFO-1234yf, ou au moins 80 % de HFO-1234yf, ou au moins 90 % de HFO-1234yf, ou au moins 95 % de HFO-1234yf, par rapport à la masse totale du fluide frigorigène de remplacement.

Dans certains modes de réalisation, ce fluide frigorigène consiste essentiellement, ou consiste en du HFO-1234yf (aux impuretés près).

Dans d'autres modes de réalisation, ce fluide frigorigène comprend du HFO-1234yf en mélange avec un ou plusieurs hydrofluorocarbures et/ou hydrofluorooléfines et/ou hydrocarbures et/ou hydrochlorofluorooléfines et/ou du CO₂.

Parmi les hydrofluorooléfines on peut citer notamment le HFO-1234ze, sous forme cis et/ou trans, et de préférence sous forme trans ; et le trifluoroéthylène (HFO-1123).

Parmi les hydrochlorofluorooléfines, on peut citer notamment le 1-chloro-3,3,3-trifluoropropène (HCFO-1233zd), sous forme cis et/ou trans, et de préférence sous forme trans.

Parmi les hydrofluorocarbures, on peut citer notamment le difluorométhane (HFC-32), le pentafluoroéthane (HFC-125), le 1,1,2,2-tétrafluoroéthane (HFC-134), le 1,1,1,2-tétrafluoroéthane (HFC-134a), le 1,1-difluoroéthane (HFC-152a), le fluoroéthane (HFC-161), le 1,1,1,2,3,3,3-heptafluoropropane (HFC-227ea), le 1,1,1-trifluoropropane (HFC-263fb) et leurs mélanges.

Dans certains modes de réalisation, ce fluide frigorigène est une composition binaire (consistant en deux composés) ou ternaire (consistant en trois composés) ou quaternaire (consistant en quatre composés) ou quinquénaire (consistant en cinq composés).

Des impuretés peuvent être présentes ou non dans de tels fluides frigorigènes. Lorsqu'elles sont présentes, elles peuvent représenter moins de 1 %, de préférence moins de 0,5 %, de préférence moins de 0,1 %, de préférence moins de 0,05 % et de préférence moins de 0,01 % (en masse) dudit fluide.

Outre le HFO-1234yf seul (aux impuretés près), des fluides frigorigènes susceptibles d'être utilisés pour le procédé de l'invention (et donc le cas échéant en tant que fluides frigorigènes de remplacement) sont ceux consistant en (aux impuretés près) :
- du HFO-1234yf et du HFC-32 ;
- du HFO-1234yf et du HFC-152a ;
- du HFO-1234yf et du HFC-134a ;
- du HFO-1234yf et du HFC-134 ;
- du HFO-1234yf et du HFO-1123 ;
- du HFO-1234yf et du HFC-125 ;
- du HFO-1234yf et du CO₂;
- du HFO-1234yf, du HFC-32 et du CO₂;
- du HFO-1234yf, du HFC-32 et du HFO-1123 ;
- du HFO-1234yf, du HFC-125 et du HFO-1123 ;
- du HFO-1234yf, du HFC-134a et du HFO-1123 ;
- du HFO-1234yf, du HFC-134 et du HFO-1123 ;
- du HFO-1234yf, du HFC-32 et du HFC-125 ;
- du HFO-1234yf, du HFC-152a et du HFC-125 ;
- du HFO-1234yf, du HFC-152a et du HFC-32 ;
- du HFO-1234yf, du HFC-134a et du HFC-152a ;
- du HFO-1234yf, du HFC-134a et du HFC-32 ;
- du HFO-1234yf, du HFC-134a et du HFC-125 ;
- du HFO-1234yf, du HFO-1234ze et du HFC-134a ;
- du HFO-1234yf, du HFO-1234ze et du HFC-152a ;
- du HFO-1234yf, du HFO-1234ze et du HFC-134 ;
- du HFO-1234yf, du HFO-1234ze et du HFC-32 ;
- du HFO-1234yf, du HFO-1234ze et du HFC-125 ;
- du HFO-1234yf, du HFC-134a, du HFC-125 et du HFC-32 ;
- du HFO-1234yf, du HFO-1234ze, du HFC-125 et du HFC-32 ;
- du HFO-1234yf, du HFC-152a, du HFC-125 et du HFC-32 ;
- du HFO-1234yf, du CO₂, du HFC-125 et du HFC-32 ;
- du HFO-1234yf, du HFC-134, du HFC-125 et du HFC-32 ;
- du HFO-1234yf, du HFC-227ea, du HFC-125 et du HFC-32 ;
- du HFO-1234yf, du HFC-134a, du HFC-152a et du HFC-32 ;
- du HFO-1234yf, du HFC-134a, du HFC-152a et du HFC-125 ;
- du HFO-1234yf, du HFO-1234ze, du HFC-152a et du HFC-32 ;
- du HFO-1234yf, du HFO-1234ze, du HFC-134a et du HFC-32 ;
- du HFO-1234yf, du HFO-1234ze, du HFC-134a et du HFC-152a ;
- du HFO-1234yf, du HFO-1234ze, du HFC-134a et du HFC-125 ;
- du HFO-1234yf, du HFC-134a, du HFC-152a, du HFC-125 et du HFC-32 ;
- du HFO-1234yf, du HFC-134a, du HFO-1234ze, du HFC-125 et du HFC-32 ;
- du HFO-1234yf, du HFC-134a, du HFC-227ea, du HFC-125 et du HFC-32 ;
- du HFO-1234yf, du HFC-134a, du CO2, du HFC-125 et du HFC-32 ;
- du HFO-1234yf, du HFC-134a, du HFC-134, du HFC-125 et du HFC-32.

Des fluides frigorigènes préférés sont notamment ceux consistant en (aux impuretés près) :
- du HFO-1234yf et du HFC-32 dans des proportions massiques respectives de 60 à 85 % et de 15 à 40 % ; ou de préférence de 63 à 79 % et de 21 à 37 % ; ou de préférence encore de 64 à 79 % et de 21 à 36 % ;
- du HFO-1234yf et du HFC-152a dans des proportions massiques respectives de 10 à 95 % et de 5 à 90 % ; ou de préférence de 50 à 95 % et de 5 à 50 % ; ou de préférence encore de 80 à 95 % et de 5 à 20 % ;
- du HFO-1234yf et du HFC-134a dans des proportions massiques respectives de 10 à 95 % et de 5 à 90 % ; ou de préférence de 40 à 60 % et de 40 à 60 % ; ou de préférence encore de 50 à 60 % et de 40 à 50 % ;
- du HFO-1234yf et du HFC-125 dans des proportions massiques respectives de 10 à 95 % et de 5 à 90 % ; ou de préférence de 50 à 95 % et de 5 à 50 % ; ou de préférence encore de 80 à 95 % et de 5 à 20 % ;
- du HFO-1234yf, du HFC-134a et du HFC-152a dans des proportions massiques respectives de 1 à 98 %, de 1 à 98 % et de 1 à 98 % ; ou de préférence de 50 à 98 %, de 1 à 49 % et de 1 à 49 % ; ou de préférence encore de 56 à 80 %, de 5 à 22% et de 5 à 22 %.
- du HFO-1234yf, du HFC-125 et du HFC-32 dans des proportions massiques respectives de 1 à 98 %, de 1 à 98 % et de 1 à 98 % ; ou de préférence de 1 à 49 %, de 1 à 49 % et de 50 à 98 % ; ou de préférence encore de 20 à 30 %, de 1 à 10% et de 60 à 75 %.
- du HFO-1234yf, du CO₂ et du HFC-32 dans des proportions massiques respectives de 1 à 98 %, de 1 à 98 % et de 1 à 98 % ; ou de préférence de 50 à 98 %, de 1 à 49 % et de 1 à 49 % ; ou de préférence encore de 70 à 80 %, de 1 à 10% et de 5 à 22 %.

Dans certains modes de réalisation, le fluide frigorigène de l'invention (le cas échéant, fluide frigorigène de remplacement) consiste en (aux impuretés près) : de 74 à 81,5 % (de préférence de 75,5 à 79,5 %) de HFO-1234yf, de 12 à 16 % de HFC-152a, et de 6,5 à 10,5 % de HFC-134a (en masse). Un tel fluide frigorigène présente l'avantage d'être azéotropique.

Dans certains modes de réalisation, le fluide frigorigène de l'invention (le cas échéant, fluide frigorigène de remplacement) consiste en (aux impuretés près) environ 77,5 % de HFO-1234yf, environ 14 % de HFC-152a et environ 8,5 % de HFC-134a (en masse). Un tel fluide frigorigène présente l'avantage d'être azéotropique.

Dans certains modes de réalisation, le fluide frigorigène de l'invention (le cas échéant, fluide frigorigène de remplacement) consiste en (aux impuretés près) environ 77,5 % de HFO-1234yf, environ 16 % de HFC-152a et environ 6,5 % de HFC-134a (en masse). Un tel fluide frigorigène présente l'avantage d'être azéotropique.

Dans certains modes de réalisation, le fluide frigorigène de l'invention (le cas échéant, fluide frigorigène de remplacement) consiste en (aux impuretés près) environ 81,5 % de HFO-1234yf, environ 12 % de HFC-152a et environ 6,5 % de HFC-134a (en masse). Un tel fluide frigorigène présente l'avantage d'être azéotropique.

Dans certains modes de réalisation, le fluide frigorigène de l'invention (le cas échéant, fluide frigorigène de remplacement) consiste en (aux impuretés près) environ 75,5 % de HFO-1234yf, environ 14,5 % de HFC-152a et environ 10 % de HFC-134a (en masse). Un tel fluide frigorigène présente l'avantage d'être azéotropique.

Dans certains modes de réalisation, le fluide frigorigène de l'invention (le cas échéant, fluide frigorigène de remplacement) consiste en (aux impuretés près) environ 77,5 % de HFO-1234yf, environ 12 % de HFC-152a et environ 10,5 % de HFC-134a (en masse). Un tel fluide frigorigène présente l'avantage d'être azéotropique.

Le GWP du fluide frigorigène utilisé dans le procédé de l'invention (qui le cas échéant est le fluide frigorigène de remplacement) est de préférence inférieur à 1000, de préférence encore inférieur à 500, ou à 150, ou à 100, ou à 50, ou à 25.

Lorsqu'un remplacement est effectué, de préférence, le GWP du fluide frigorigène de remplacement est inférieur au GWP du fluide frigorigène initial.

Le GWP est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project *».*

Lorsqu'un remplacement est effectué, dans certains modes de réalisation, le HFC-134a (seul) est remplacé par le HFO-1234yf (seul).

Lorsqu'un remplacement est effectué, dans certains modes de réalisation, un fluide frigorigène initial comprenant du HFC-134a en mélange avec un ou plusieurs autres composés est remplacé par un fluide frigorigène de remplacement comprenant du HFO-1234yf en mélange avec le ou les mêmes autres composés.

De préférence, si du HFC-134a est présent dans le fluide frigorigène de remplacement, la proportion massique de HFC-134a dans le fluide frigorigène de remplacement est inférieure à la proportion massique de HFC-134a dans le fluide frigorigène initial.

De préférence, si un ou des hydrofluorocarbures sont présents dans le fluide frigorigène de remplacement, la proportion massique de l'ensemble des hydrofluorocarbures dans le fluide frigorigène de remplacement est inférieure à la proportion massique de l'ensemble des hydrofluorocarbures dans le fluide frigorigène initial.

### Lubrifiant

La composition de transfert de chaleur utilisée pour la mise en œuvre du procédé comprend un lubrifiant (lubrifiant dit de remplacement, lorsqu'un remplacement est effectué).

Ce lubrifiant comprend un POE. De préférence, le lubrifiant est un POE. Alternativement, on peut envisager qu'il s'agisse d'un mélange de POE et d'un autre produit comme par exemple un PAG.

Dans ce qui précède, par « *un POE* », on entend soit un POE unique, soit de préférence un mélange de plusieurs POE.

Un POE peut être obtenu par réaction d'au moins un polyol (c'est-à-dire composé contenant au moins deux groupements OH) avec au moins un acide carboxylique.

Les POE susceptibles d'être utilisés dans la présente invention, comprennent les POE de types A, B, C et D décrits plus en détail ci-dessous.

Les POE de type A répondent à la formule (I) suivante :

(I) R¹[OC(O)R²]ₙ

dans laquelle :
- R¹ est un radical hydrocarboné, linéaire ou ramifié, éventuellement substitué par au moins un groupement hydroxyle et/ou comprenant au moins un hétéroatome choisi dans le groupe constitué de O, **N,** et S ;
- chaque R² est, indépendamment, choisi dans le groupe constitué de : i) H ; ii) un radical hydrocarboné aliphatique ; iii) un radical hydrocarboné ramifié ; iv) un mélange d'un radical ii) et/ou iii), avec un radical hydrocarboné aliphatique comprenant de 8 à 14 atomes de carbone ; et
- n est un entier d'au moins 2.

Dans le cadre de l'invention, on entend par *« radical hydrocarboné »* un radical composé d'atomes de carbone et d'hydrogène.

Dans certains modes de réalisation, les polyols utilisés pour l'obtention des POE de type A répondent à la formule (II) suivante :

(II) R¹(OH)ₙ

dans laquelle :
- R¹ est un radical hydrocarboné, linéaire ou ramifié, éventuellement substitué par au moins un groupement hydroxyle, de préférence par deux groupements hydroxyles, et/ou comprenant au moins un hétéroatome choisi dans le groupe constitué de O, **N,** et S ; et
- n est un entier d'au moins 2.

Dans certains modes de réalisation, R¹ est un radical hydrocarboné, linéaire ou ramifié, comprenant de 4 à 40 atomes de carbone, de préférence de 4 à 20 atomes de carbone.

Dans certains modes de réalisation, R¹ est un radical hydrocarboné, linéaire ou ramifié, comprenant au moins un atome d'oxygène.

Dans certains modes de réalisation, R¹ est un radical hydrocarboné ramifié comprenant de 4 à 10 atomes de carbone, de préférence 5 atomes de carbone, substitué par deux groupements hydroxyles.

Dans certains modes de réalisation, les polyols comprennent de 2 à 10 groupements hydroxyles, de préférence de 2 à 6 groupements hydroxyles.

Les polyols peuvent comprendre un ou plusieurs groupes oxyalkylènes, il s'agit dans ce cas particulier de polyétherpolyols.

Les polyols peuvent également comprendre un ou plusieurs atomes d'azote. Par exemple, les polyols peuvent être des alcanol amine contenant de 3 à 6 groupements hydroxyles. Dans certains modes de réalisation, les polyols sont des alcanol amine contenant au moins deux groupements hydroxyles, et de préférence au moins trois.

Dans certains modes de réalisation, les polyols sont choisis dans le groupe constitué de l'éthylène glycol, du diéthylène glycol, du triéthylène glycol, du propylène glycol, du dipropylène glycol, du glycérol, du néopentylglycol, du 1,2-butanediol, du 1,4-butanediol, du 1,3-butanediol, du pentaérythritol, du dipentaérythritol, du tripentaérythritol, du triglycérol, du triméthylolpropane, du sorbitol, de l'hexaglycérol, et de leurs mélanges.

Dans certains modes de réalisation, les acides carboxyliques utilisés pour l'obtention des POE de type A répondent à la formule (III) suivante :

(III) R²COOH

dans laquelle :
- R² est choisi dans le groupe constitué de : i) H ; ii) un radical hydrocarboné aliphatique ; iii) un radical hydrocarboné ramifié ; iv) un mélange d'un radical ii) et/ou iii), avec un radical hydrocarboné aliphatique comprenant de 8 à 14 atomes de carbone.

Dans certains modes de réalisation, R² est un radical hydrocarboné aliphatique comprenant de 1 à 10, préférentiellement de 1 à 7 atomes de carbone, et en particulier de 1 à 6 atomes de carbone.

Dans certains modes de réalisation, R² est un radical hydrocarboné ramifié comprenant de 4 à 20 atomes de carbone, en particulier de 5 à 14 atomes de carbone, et préférentiellement de 6 à 8 atomes de carbone.

Dans certains modes de réalisation, un radical hydrocarboné ramifié tel que mentionné ci-dessus répond à la formule (IV) suivante :

(IV) -C(R³)(R⁴)(R⁵)

dans laquelle R³, R⁴ et R⁵ sont, indépendamment les uns des autres, un groupe alkyle, et au moins un des groupes alkyles contient au minimum deux atomes de carbone. De tels groupes alkyles ramifiés, une fois liés au groupe carboxyle, sont connus sous la dénomination « *groupe néo »,* et l'acide correspondant en tant que « acide néo ». De préférence, R³ et R⁴ sont des groupes méthyles et R⁵ est un groupe alkyle comprenant au moins deux atomes de carbone.

Le radical R² peut comprendre un ou plusieurs groupes carboxy, ou groupes esters tels que -COOR⁶, avec R⁶ représentant un radical alkyle, hydroxyalkyle ou un groupe hydroxyalkyloxy alkyle.

Dans certains modes de réalisation, l'acide R²COOH de formule (III) est un acide monocarboxylique.

Des exemples d'acides carboxyliques dans lesquels le radical hydrocarboné est aliphatique sont notamment : l'acide formique, l'acide acétique, l'acide propionique, l'acide butyrique, l'acide pentanoïque, l'acide hexanoïque et l'acide heptanoïque.

Des exemples d'acides carboxyliques dans lesquels le radical hydrocarboné est ramifié sont notamment : l'acide 2-éthyl-n-butyrique, l'acide 2-hexyldécanoïque, l'acide isostéarique, l'acide 2-méthyl-hexanoïque, l'acide 2-méthylbutanoïque, l'acide 3-méthylbutanoïque, le 3,5,5-triméthyl-hexanoïque, l'acide 2-éthylhexanoïque, l'acide néoheptanoïque, et l'acide néodécanoïque.

D'autres acides carboxyliques pouvant être utilisés dans la préparation des POE de type A sont les acides carboxyliques comprenant un radical hydrocarboné aliphatique comprenant de 8 à 14 atomes de carbone. On peut par exemple citer : l'acide décanoïque, l'acide dodécanoïque, l'acide laurique, l'acide stéarique, l'acide myristique, l'acide béhénique... Parmi les acides dicarboxyliques, on peut citer l'acide maléique, l'acide succinique, l'acide adipique, l'acide sébacique...

Dans certains modes de réalisation, les acides carboxyliques utilisés pour préparer les POE de type A comprennent un mélange d'acides monocarboxyliques et dicarboxyliques, la proportion d'acides monocarboxyliques étant majoritaire. La présence d'acides dicarboxyliques résulte notamment dans la formation de POE de viscosité élevée.

En particulier, la réaction de formation des POE de type A par réaction entre l'acide carboxylique et les polyols est une réaction catalysée par un acide. Il s'agit notamment d'une réaction réversible, qui peut être complète par l'utilisation d'une large quantité d'acide ou par l'élimination de l'eau formée au cours de la réaction. La réaction d'estérification peut être réalisée en présence d'acides organiques ou inorganiques, tels que l'acide sulfurique, l'acide phosphorique...

Dans certains modes de réalisation, la réaction est réalisée en l'absence de catalyseur.

La quantité d'acide carboxylique et de polyol peut varier dans le mélange selon les résultats désirés. Dans le cas particulier où tous les groupements hydroxyles sont estérifiés, une quantité suffisante d'acide carboxylique doit être ajoutée pour réagir avec tous les hydroxyles.

Dans certains modes de réalisation, lors de l'utilisation de mélanges d'acides carboxyliques, ceux-ci peuvent réagir de manière séquentielle avec les polyols.

Dans certains modes de réalisation, lors de l'utilisation de mélange d'acides carboxyliques, un polyol réagit d'abord avec un acide carboxylique, typiquement l'acide carboxylique de poids moléculaire le plus élevé, suivie de la réaction avec l'acide carboxylique ayant une chaîne hydrocarbonée aliphatique.

Dans certains modes de réalisation, les esters peuvent être formés par réaction entre les acides carboxyliques (ou leurs dérivés anhydrides ou esters) avec les polyols, en présence d'acides à température élevée, tout en enlevant l'eau formée au cours de la réaction. Typiquement, la réaction peut être réalisée à une température comprise de 75 à 200°C.

Dans certains modes de réalisation, les POE formés peuvent comprendre des groupements hydroxyles n'ayant pas tous réagi, il s'agit dans ce cas de POE partiellement estérifiés.

Dans certains modes de réalisation, les POE sont obtenus à partir de l'alcool pentaérythritol, et d'un mélange d'acides carboxyliques : l'acide isononanoïque, au moins un acide ayant un radical hydrocarboné aliphatique comprenant de 8 à 10 atomes de carbone, et l'acide heptanoïque. Les esters de polyol préférés sont obtenus à partir du pentaérythritol, et d'un mélange de 70 % d'acide isononanoïque, de 15 % d'au moins un acide carboxylique ayant un radical hydrocarboné aliphatique comprenant de 8 à 10 atomes de carbone, et 15 % d'acide heptanoïque. On peut par exemple citer l'huile Solest 68 commercialisée par CPI Engineering Services Inc.

Les POE de type B comprennent au moins un ester d'un ou plusieurs acides carboxyliques ramifiés comprenant au plus 8 atomes de carbone. L'ester est notamment obtenu par réaction dudit acide carboxylique ramifié avec un ou plusieurs polyols.

De préférence, l'acide carboxylique ramifié comprend au moins 5 atomes de 25 carbone. En particulier, l'acide carboxylique ramifié comprend de 5 à 8 atomes de carbone, et préférentiellement il contient 5 atomes de carbone.

De préférence, l'acide carboxylique ramifié susmentionné ne comprend pas 9 atomes de carbone. En particulier, ledit acide carboxylique n'est pas l'acide 3,5,5-triméthylhexanoïque.

Dans certains modes de réalisation, l'acide carboxylique ramifié est choisi parmi l'acide 2-méthylbutanoïque, l'acide 3-méthylbutanoïque, et leurs mélanges.

Dans certains modes de réalisation, le polyol est choisi dans le groupe constitué du néopentylglycol, du glycérol, du triméthylol propane, du pentaérythritol, du dipentaérythritol, du tripentaerythritol, et de leurs mélanges.

Dans certains modes de réalisation, les **POE** sont obtenus à partir de :
i) un acide carboxylique choisi parmi l'acide 2-méthylbutanoïque, l'acide 3-méthylbutanoïque, et leurs mélanges ; et
ii) un polyol choisi dans le groupe constitué du néopentylglycol, du glycérol, du triméthylol propane, du pentaérythritol, du dipentaérythritol, du tripentaerythritol, et de leurs mélanges.

Dans certains modes de réalisation, le **POE** est celui obtenu à partir :
- de l'acide 2-méthylbutanoïque et du pentaérythritol ;
- de l'acide 2-méthylbutanoïque et du dipentaérythritol ;
- de l'acide 3-méthylbutanoïque et du pentaérythritol ;
- de l'acide 3-méthylbutanoïque et du dipentaérythritol ; ou
- de l'acide 2-méthylbutanoïque et du néopentylglycol.

Les **POE** de type C sont des esters de poly(néopentylpolyol) obtenus par :
i) réaction d'un néopentylpolyol ayant la formule suivante (V) : 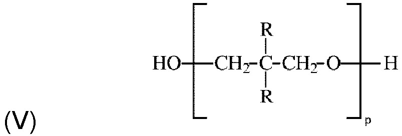 dans laquelle :
   - chaque R représente, indépendamment, CH₃, C₂H₅ ou CH₂OH ;
   - p est un entier allant de 1 à 4 ;
   avec au moins un acide monocarboxylique ayant de 2 à 15 atomes de carbone, et en présence d'un catalyseur acide, le rapport molaire entre les groupes carboxyles et les groupes hydroxyles étant inférieur à 1:1, pour former une composition de poly(néopentyl)polyol partiellement estérifiée; et
ii) réaction de la composition de poly(néopentyl)polyol partiellement estérifiée obtenue à l'issue de l'étape i), avec un autre acide carboxylique ayant de 2 à 15 atomes de carbone, pour former la composition finale d'ester(s) de poly(néopentylpolyol).

De préférence, la réaction i) est réalisée avec un rapport molaire allant de 1:4 à 1:2.

De préférence, le néopentylpolyol a la formule suivante (VI) : 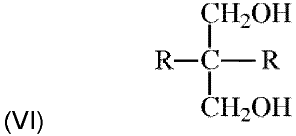 dans laquelle chaque R représente, indépendamment les uns des autres, CH₃, C₂H₅ ou CH₂OH.

Des néopentylpolyols préférés sont ceux choisis parmi le pentaérythritol, le dipentaérythritol, le tripentaérythritol, le tétraérythritol, le triméthylolpropane, le triméthyloléthane, et le néopentylglycol. En particulier, le néopentylpolyol est le dipentaérythritol.

De préférence, un unique néopentylpolyol est utilisé pour produire le lubrifiant. Dans certains cas, deux ou plusieurs néopentylpolyols sont utilisés. C'est notamment le cas lorsqu'un produit commercial de pentaérythritol comprend des faibles quantités de dipentaérythritol, de tripentaérythritol, et de tétraérythritol.

Dans certains modes de réalisation, l'acide monocarboxylique susmentionné comprend de 5 à 11 atomes de carbone, de préférence de 6 à 10 atomes de carbone.

Les acides monocarboxyliques ont notamment la formule générale (VII) suivante :

(VII) R'C(O)OH

dans laquelle R' est un radical alkyle, linéaire ou ramifié, en C1-C12, un radical aryle en C6-C12, un radical aralkyle en C6-C30. De préférence, R' est un radical alkyle en C4-C10, et préférentiellement en C5-C9.

En particulier, l'acide monocarboxylique peut être choisi dans le groupe constitué de l'acide butanoïque, de l'acide pentanoïque, de l'acide hexanoïque, de l'acide heptanoïque, de l'acide n-octanoïque, de l'acide n-nonanoïque, de l'acide n-décanoïque, de l'acide 3-méthylbutanoïque, de l'acide 2-méthylbutanoïque, de l'acide 2,4-diméthylpentanoïque, de l'acide 2-éthylhexanoïque, de l'acide 3,3,5-triméthylhexanoïque, de l'acide benzoïque, et de leurs mélanges.

Dans certains modes de réalisation, l'acide monocarboxylique est l'acide n-heptanoïque, ou un mélange d'acide n-heptanoïque avec un autre acide monocarboxylique linéaire, en particulier l'acide n-octanoïque et/ou l'acide n-décanoïque.

Un tel mélange d'acide monocarboxylique peut notamment comprendre entre 15 et 100 mol% d'acide heptanoïque et entre 0 et 85 mol% d'autre(s) acide(s) monocarboxylique(s). En particulier, le mélange peut comprendre entre 75 et 100 mol% d'acide heptanoïque, et entre 0 et 25 mol% d'un mélange d'acide octanoïque et d'acide décanoïque dans un rapport molaire 3:2.

Dans certains modes de réalisation, les POE comprennent :
i) de 45 à 55 % en masse d'un ester de monopentaérythritol avec au moins un acide monocarboxylique ayant de 2 à 15 atomes de carbone ;
ii) moins de 13 % en masse d'un ester de dipentaérythritol avec au moins un acide monocarboxylique ayant de 2 à 15 atomes de carbone ;
iii) moins de 10 % en masse d'un ester de tripentaérythritol avec au moins un acide monocarboxylique ayant de 2 à 15 atomes de carbone ; et
iv) au moins 25 % en masse d'un ester de tétraérythritol et d'autres oligomères de pentaérythritol, avec au moins un acide monocarboxylique ayant de 2 à 15 atomes de carbone

Dans certains modes de réalisation, les POE comprennent, en masse, de 0 à 5 %, ou de 5 à 10 %, ou de 10 à 15 %, ou de 15 à 20 %, ou de 20 à 25 %, ou de 25 à 30 %, ou de 30 à 35 %, ou de 35 à 40 %, ou de 40 à 45 %, ou de 45 à 50 %, ou de 50 à 55 %, ou de 55 à 60 %, ou de 60 à 65 %, ou de 65 à 70 %, ou de 70 à 75 %, ou de 75 à 80 %, ou de 80 à 85 %, ou de 85 à 90 %, ou de 90 à 95 %, ou de 95 à 100 %, d'un ester de monopentaérythritol avec au moins un acide monocarboxylique contenant de 2 à 15 atomes de carbone.

Les POE de type D répondent à la formule (VIII) suivante : 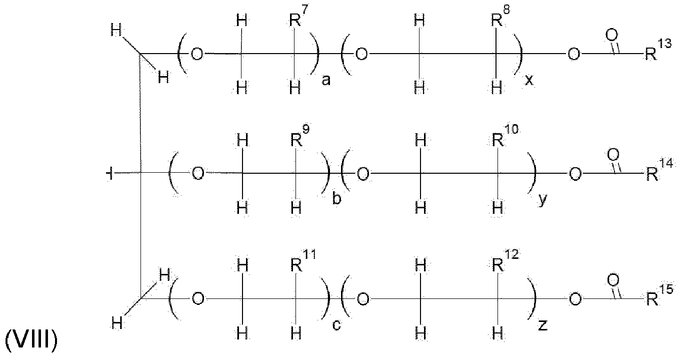 dans laquelle :
- R⁷, R⁸, R⁹, R¹⁰, R¹¹ et R¹² sont, indépendamment les uns des autres, H ou CH₃ ;
- a, b, c, y, x et z, sont, indépendamment les uns des autres, un entier ;
- a+x, b+y, et c+z sont, indépendamment les uns des autres, des entiers allant de 1 à 20 ;
- R¹³, R¹⁴ et R¹⁵ sont, indépendamment les uns des autres, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles, R¹³, R¹⁴ et R¹⁵ ayant de 1 à 17 atomes de carbone, et pouvant être éventuellement substitués.

Dans certains modes de réalisation, chacun de R¹³, R¹⁴ et R¹⁵ représente, indépendamment les uns des autres, un groupe alkyle linéaire ou ramifié, un groupe alkényle, un groupe cycloalkyle, lesdits groupes alkyles, alkényles ou cycloalkyles pouvant comprendre au moins un hétéroatome choisi parmi N, O, Si, F ou S. De préférence, chacun de R¹³, R¹⁴ et R¹⁵ a, indépendamment les uns des autres, de 3 à 8 atomes de carbone, de préférence de 5 à 7 atomes de carbone.

De préférence, a+x, b+y, et c+z sont, indépendamment les uns des autres, des entiers allant de 1 à 10, préférentiellement de 2 à 8, et encore plus préférentiellement de 2 à 4.

De préférence, R⁷, R⁸, R⁹, R¹⁰, R¹¹ et R¹² représentent H.

Les POE de formule (VIII) ci-dessus peuvent typiquement être préparés tels que décrits aux paragraphes [0027] à [0030] de la demande internationale WO 2012/177742.

En particulier, les POE de formule (VIII) peuvent être obtenus par estérification d'alcoxylates de glycérol (tels que décrits au paragraphe [0027] de WO 2012/177742) avec un ou plusieurs acides monocarboxyliques ayant de 2 à 18 atomes de carbone.

Dans certains modes de réalisation, les acides monocarboxyliques ont l'une des formules suivantes : R¹³COOH, R¹⁴COOH et R¹⁵COOH, dans lesquelles R¹³, R¹⁴ et R¹⁵ sont tels que définis ci-dessus. Des dérivés des acides carboxyliques peuvent également être utilisés, tels que les anhydrides, les esters et les halogénures d'acyles.

L'estérification peut être réalisée avec un ou plusieurs acides monocarboxyliques. Des acides monocarboxyliques préférés sont ceux choisis dans le groupe constitué de l'acide acétique, l'acide propanoïque, l'acide butyrique, l'acide isobutanoïque, l'acide pivalique, l'acide pentanoïque, l'acide isopentanoique, l'acide hexanoïque, l'acide heptanoïque, l'acide octanoïque, l'acide 2-éthylhexanoïque, l'acide 3,3,5-triméthylhexanoïque, l'acide nonanoïque, l'acide décanoïque, l'acide néodécanoïque, l'acide undécanoïque, l'acide dodécanoïque, l'acide tridécanoïque, l'acide myristique, l'acide pentadécanoïque, l'acide palmitique, l'acide stéarique, l'acide oléïque, l'acide linoléïque, l'acide palmitoléïque, l'acide citronellique, l'acide undécénoïque, l'acide laurique, l'acide undécylénique, l'acide linolénique, l'acide arachidique, l'acide béhénique, l'acide tétrahydrobenzoïque, l'acide abiétique hydrogéné ou non, l'acide 2-éthylhexanoïque, l'acide furoïque, l'acide benzoïque, l'acide 4- acétylbenzoïque, l'acide pyruvique, l'acide 4-tert-butyl-benzoïque, l'acide naphthenique, l'acide 2-méthyl benzoïque, l'acide salicylique, leurs isomères, leurs esters méthyliques, et leurs mélanges.

Dans certains modes de réalisation, l'estérification est réalisée avec un ou plusieurs acides monocarboxyliques choisis dans le groupe constitué de l'acide pentanoïque, l'acide 2-méthylbutanoïque, l'acide n-hexanoïque, l'acide n-heptanoïque, le 3,3,5-triméthylhexanoïque, l'acide 2-éthylhexanoïque, l'acide n-octanoïque, l'acide n-nonanoïque et l'acide isononanoïque.

De préférence, l'estérification est réalisée avec un ou plusieurs acides monocarboxyliques choisis dans le groupe constitué de l'acide butyrique, l'acide isobutyrique, l'acide n-pentanoïque, l'acide 2-méthylbutanoïque, l'acide 3-méthylbutanoïque, l'avide n-hexanoïque, l'avide n-heptanoïque, l'acide n-octanoïque, l'acide 2-éthylhexanoïque, l'acide 3,3,5-triméthylhexanoïque, l'acide n-nonanoïque, 15 l'acide décanoïque, l'acide undécanoïque, l'acide undécélénique, l'acide laurique, l'acide stéarique, l'acide isostéarique, et leurs mélanges.

Dans certains modes de réalisation, les POE ont la formule (IX) suivante : 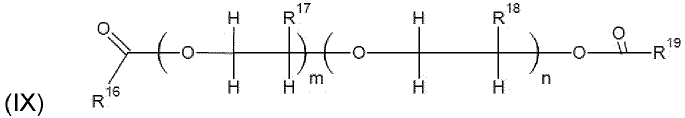 dans laquelle :
- chacun de R¹⁷ et R¹⁸, est, indépendamment l'un de l'autre, H ou CH₃ ;
- chacun de m et n, est, indépendamment l'un de l'autre, un entier, avec m+n étant un entier allant de 1 à 10 ;
- R¹⁶ et R¹⁹ sont, indépendamment l'un de l'autre, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryles et des cycloalkylarylalkyles, R¹⁶ et R¹⁹ ayant de 1 à 17 atomes de carbone, et pouvant être éventuellement substitués.

Dans certains modes de réalisation, chacun de R¹⁶ et R¹⁹ représente, indépendamment l'un de l'autre, un groupe alkyle linéaire ou ramifié, un groupe alkényle, un groupe cycloalkyle, lesdits groupes alkyles, alkényles ou cycloalkyles pouvant comprendre au moins un hétéroatome choisi parmi N, O, Si, F ou S. De préférence, chacun de R¹⁶ et R¹⁹ a, indépendamment l'un de l'autre, de 3 à 8 atomes de carbone, de préférence de 5 à 7 atomes de carbone.

Dans certains modes de réalisation, chacun de R¹⁷ et R¹⁸ représente H, et/ou m+n est un entier allant de 2 à 8, de 4 à 10, de 2 à 5, ou de 3 à 5. En particulier, m+n vaut 2, 3 ou 4.

Dans certains modes de réalisation, les POE de formule (IX) ci-dessus sont des diesters de triéthylène glycol, des diesters de tétraéthylène glycol, en particulier avec un ou deux acides monocarboxyliques ayant de 4 à 9 atomes de carbone.

Les POE de formule (IX) ci-dessus peuvent être préparés par estérifications d'un éthylène glycol, d'un propylène glycol, ou d'un oligo- ou polyalkylène glycol, (qui peut être un oligo- ou polyéthylène glycol, oligo- ou polypropylène glycol, ou un copolymère à bloc éthylène glycol-propylène glycol), avec un ou deux acides monocarboxyliques ayant de 2 à 18 atomes de carbone. L'estérification peut être réalisée de manière identique à la réaction d'estérification mise en oeuvre pour préparer les POE de formule (VIII) ci-dessus.

En particulier, des acides monocarboxyliques identiques à ceux utilisés pour préparer les POE de formule (VIII) ci-dessus, peuvent être utilisés pour former les POE de formule (IX).

Dans certains modes de réalisation, le lubrifiant comprend de 20 à 80%, de préférence de 30 à 70%, et préférentiellement de 40 à 60% en masse d'au moins un POE de formule (VIII), et de 80 à 20%, de préférence de 70 à 30%, et préférentiellement de 60 à 40% en masse d'au moins un POE de formule (IX).

De manière générale, certaines fonctions alcools peuvent ne pas être estérifiées lors de la réaction d'estérification, cependant leur proportion reste faible. Ainsi, les POE peuvent comprendre entre 0 et 5 % molaire relatif de motifs CH₂OH par rapport aux motifs -CH₂-O-C(=O)-.

Le lubrifiant utilisé dans le procédé de l'invention est tel que la solubilité du HFO-1234yf dans ce lubrifiant est inférieure à la solubilité du HFC-134a dans le lubrifiant

Par « *solubilité »* d'un composé A dans le lubrifiant, on entend la proportion massique maximale de composé A à l'état gazeux qui peut être absorbée par le lubrifiant en phase liquide (c'est-à-dire la proportion massique relative maximale de composé A dans le lubrifiant en phase liquide, lorsque le lubrifiant est mis en contact avec le composé A à l'état gazeux). La solubilité peut être mesurée comme décrit ci-dessous dans l'exemple 1.

La condition de solubilité ci-dessus est vérifiée à une température de 0°C, et à une pression qui est de :
- 2,2 bar abs pour le HFO-1234yf ; et
- 2,0 bar abs pour le HFC-134a.

Ces valeurs de pression correspondent à la pression de saturation vapeur respectivement du HFO-1234yf et du HFC-134a à la température de -10°C.

Lorsqu'un remplacement est effectué, le lubrifiant de remplacement peut être identique au lubrifiant initial ou différent de celui-ci.

Le lubrifiant initial peut être de tout type. Il peut notamment être choisi parmi les huiles minérales, les huiles de silicone, les paraffines naturelles ou synthétiques, les naphtènes, les alkylbenzènes, les poly-alpha oléfines, les polyalkène glycols (PAG), les esters de polyol (POE), les polyvinyléthers et les mélanges de ceux-ci.

De préférence, le lubrifiant initial comprend un POE ou est un POE.

La description détaillée des types de POE possibles effectuée ci-dessus s'applique également au lubrifiant initial, lorsque celui-ci comprend un POE ou est un POE.

### Additifs

Les additifs qui peuvent être présents dans la composition de transfert de chaleur de l'invention peuvent notamment être choisis parmi les nanoparticules, les stabilisants, les tensioactifs, les agents traceurs, les agents fluorescents, les agents odorants et les agents de solubilisation.

De préférence, les additifs ne sont pas des lubrifiants.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de nanoparticules on peut notamment utiliser les nanoparticules de carbone, les oxydes métalliques (cuivre, aluminium), TiO₂, Al₂O₃, MoS₂...

A titre d'agents traceurs (susceptibles d'être détectés), on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent des composés constituant le fluide frigorigène.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide frigorigène.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)- phénol et les combinaisons de ceux-ci.

Lorsqu'un remplacement est effectué, les additifs décrits ci-dessus peuvent être présents dans la composition de transfert de chaleur initiale et/ou dans la composition de transfert de chaleur de remplacement. De préférence, les mêmes additifs sont présents dans la composition de transfert de chaleur initiale et dans la composition de transfert de chaleur de remplacement.

### Formulation des compositions de transfert de chaleur

Dans chaque composition de transfert de chaleur décrite ici (le cas échéant composition de transfert de chaleur initiale d'une part, et composition de transfert de chaleur de remplacement d'autre part), la proportion massique de fluide frigorigène peut représenter notamment de 1 à 5 % de la composition ; ou de 5 à 10 % de la composition ; ou de 10 à 15 % de la composition ; ou de 15 à 20 % de la composition ; ou de 20 à 25 % de la composition ; ou de 25 à 30 % de la composition ; ou de 30 à 35 % de la composition ; ou de 35 à 40 % de la composition ; ou de 40 à 45 % de la composition ; ou de 45 à 50 % de la composition ; ou de 50 à 55 % de la composition ; ou de 55 à 60 % de la composition ; ou de 60 à 65 % de la composition ; ou de 65 à 70 % de la composition ; ou de 70 à 75 % de la composition ; ou de 75 à 80 % de la composition ; ou de 80 à 85 % de la composition ; ou de 85 à 90 % de la composition ; ou de 90 à 95 % de la composition ; ou de 95 à 99 % de la composition.

Dans la présente description, lorsque plusieurs gammes possibles sont envisagées, les gammes résultant de la combinaison de celles-ci sont aussi couvertes : par exemple, la proportion massique de fluide frigorigène dans la composition de transfert de chaleur peut valoir de 50 à 55 %, et de 55 à 60 %, c'est-à-dire de 50 à 60%, etc.

De préférence, la composition de transfert de chaleur de l'invention (qui le cas échéant est une composition de transfert de chaleur de remplacement) comprend au moins 50 % en masse de fluide frigorigène, et en particulier de 50 % à 95 % en masse.

Le cas échéant, la composition de transfert de chaleur initiale comprend de préférence au moins 50 % en masse de fluide frigorigène, et en particulier de 50 % à 95 % en masse.

Dans chaque composition de transfert de chaleur décrite ici (le cas échéant composition de transfert de chaleur initiale d'une part, et composition de transfert de chaleur de remplacement d'autre part), la proportion massique de lubrifiant peut représenter notamment de 1 à 5 % de la composition ; ou de 5 à 10 % de la composition ; ou de 10 à 15 % de la composition ; ou de 15 à 20 % de la composition ; ou de 20 à 25 % de la composition ; ou de 25 à 30 % de la composition ; ou de 30 à 35 % de la composition ; ou de 35 à 40 % de la composition ; ou de 40 à 45 % de la composition ; ou de 45 à 50 % de la composition ; ou de 50 à 55 % de la composition ; ou de 55 à 60 % de la composition ; ou de 60 à 65 % de la composition ; ou de 65 à 70 % de la composition ; ou de 70 à 75 % de la composition ; ou de 75 à 80 % de la composition ; ou de 80 à 85 % de la composition ; ou de 85 à 90 % de la composition ; ou de 90 à 95 % de la composition ; ou de 95 à 99 % de la composition.

Les additifs représentent de préférence de 0 à 30 %, de préférence encore de 0 à 20 %, de préférence encore de 0 à 10 %, de préférence encore de 0 à 5 %, et de préférence encore de 0 à 2 % de chaque composition de transfert de chaleur, en proportions massiques.

### Adaptation de la surchauffe et/ou de la viscosité

La surchauffe dans le procédé de transfert de chaleur de l'invention (le cas échéant mis en œuvre avec la composition de transfert de chaleur de remplacement, lorsqu'un remplacement est effectué) peut être notamment de 1 à 2°C ; ou de 2 à 3°C ; ou de 3 à 4°C ; ou de 4 à 5°C ; ou de 5 à 7°C ; ou de 7 à 10°C ; ou de 10 à 15°C ; ou de 15 à 20°C ; ou de 20 à 25°C ; ou de 25 à 30°C ; ou de 30 à 50°C.

Des gammes de surchauffe de 1 à 20°C, de 2 à 10°C et de 3 à 5°C sont des exemples de gammes préférées.

Lorsqu'un remplacement est effectué, la surchauffe dans le même procédé de transfert de chaleur mis en œuvre avec la composition de transfert de chaleur initiale peut être notamment de 1 à 2°C ; ou de 2 à 3°C ; ou de 3 à 4°C ; ou de 4 à 5°C ; ou de 5 à 7°C ; ou de 7 à 10°C ; ou de 10 à 15°C ; ou de 15 à 20°C ; ou de 20 à 25°C ; ou de 25 à 30°C ; ou de 30 à 50°C.

Des gammes de surchauffe de 1 à 20°C, de 2 à 10°C et de 3 à 5°C sont des exemples de gammes préférées.

Dans certains modes de réalisation, lorsqu'un remplacement est effectué, la surchauffe est réglée essentiellement à la même valeur, par un ajustement adéquat des paramètres de l'installation et notamment du module d'expansion.

Dans d'autres modes de réalisation, lorsqu'un remplacement est effectué, la surchauffe est diminuée lors du remplacement de la composition de transfert de chaleur, par un ajustement adéquat des paramètres de l'installation et notamment du module d'expansion.

Ainsi, la différence entre la surchauffe lorsque le procédé est mis en œuvre avec la composition de transfert de chaleur initiale et la surchauffe lorsque le procédé est mis en œuvre, selon l'invention, avec la composition de transfert de chaleur de remplacement peut notamment valoir : de 1 à 2°C ; ou de 2 à 3°C ; ou de 3 à 4°C ; ou de 4 à 5°C ; ou de 5 à 6°C ; ou de 6 à 7 °C ; ou de 7 à 8°C ; ou de 8 à 9°C ; ou de 9 à 10°C ; ou de 10 à 15°C ; ou de plus de 15°C.

Le lubrifiant utilisé dans le procédé de l'invention (qui le cas échéant est le lubrifiant de remplacement, lorsqu'un remplacement est effectué), présente de préférence une viscosité de 1 à 1000 centiStokes (cSt ou mm²/s).

L'ensemble des valeurs de viscosité se rapportent à la viscosité cinématique, mesurée à une température de 40°C, selon la norme **DIN EN** ISO 3104.

Ce lubrifiant peut ainsi présenter une viscosité de 1 à 5 cSt, ou de 5 à 10 cSt, ou de 10 à 20 cSt, ou de 20 à 30 cSt, ou de 30 à 40 cSt, ou de 40 à 50 cSt, ou de 50 à 60 cSt, ou de 60 à 70 cSt, ou de 70 à 80 cSt, ou de 80 à 90 cSt, ou de 90 à 100 cSt, ou de 100 à 150 cSt, ou de 150 à 200 cSt, ou de 200 à 250 cSt, ou de 250 à 300 cSt, ou de 300 à 400 cSt, ou de 400 à 500 cSt, ou de 500 à 600 cSt, ou de 600 à 700 cSt, ou de 700 à 800 cSt, ou de 800 à 900 cSt, ou de 900 à 1000 cSt.

Des exemples de gammes préférées sont de 10 à 200 cSt, ou de 20 à 100 cSt, ou de 30 à 80 cSt.

Lorsqu'un remplacement est effectué, le lubrifiant initial peut également présenter une viscosité de 1 à 5 cSt, ou de 5 à 10 cSt, ou de 10 à 20 cSt, ou de 20 à 30 cSt, ou de 30 à 40 cSt, ou de 40 à 50 cSt, ou de 50 à 60 cSt, ou de 60 à 70 cSt, ou de 70 à 80 cSt, ou de 80 à 90 cSt, ou de 90 à 100 cSt, ou de 100 à 150 cSt, ou de 150 à 200 cSt, ou de 200 à 250 cSt, ou de 250 à 300 cSt, ou de 300 à 400 cSt, ou de 400 à 500 cSt, ou de 500 à 600 cSt, ou de 600 à 700 cSt, ou de 700 à 800 cSt, ou de 800 à 900 cSt, ou de 900 à 1000 cSt.

Des exemples de gammes préférées sont de 10 à 200 cSt, ou de 20 à 100 cSt, ou de 30 à 80 cSt.

La viscosité du lubrifiant est avantageusement adaptée en fonction du type de procédé de transfert de chaleur mis en œuvre et en fonction du compresseur utilisé.

Dans certains modes de réalisation, le procédé de transfert de chaleur est un procédé de réfrigération, mis en œuvre dans un réfrigérateur ; dans un tel cas la viscosité du lubrifiant est de préférence de 2 à 60 cSt, de préférence encore de 5 à 50 cSt, et de préférence encore de 10 à 40 cSt. Lorsqu'un remplacement est effectué, ces gammes s'appliquent au lubrifiant initial et/ou au lubrifiant de remplacement. Lorsqu'un remplacement est effectué, de préférence le HFC-134a est utilisé en tant que fluide frigorigène initial.

Dans certains modes de réalisation, le procédé de transfert de chaleur est mis en œuvre avec un compresseur hermétique ou semi-hermétique ; dans un tel cas la viscosité du lubrifiant est de préférence de 5 à 100 cSt, de préférence encore de 10 à 80 cSt, et de préférence encore de 20 à 70 cSt. Lorsqu'un remplacement est effectué, ces gammes s'appliquent au lubrifiant initial et/ou au lubrifiant de remplacement. Lorsqu'un remplacement est effectué, de préférence le HFC-134a est utilisé en tant que fluide frigorigène initial.

Dans certains modes de réalisation, le procédé de transfert de chaleur est mis en œuvre avec un compresseur ouvert ; dans un tel cas la viscosité du lubrifiant est de préférence de 10 à 200 cSt, de préférence encore de 20 à 150 cSt, et de préférence encore de 30 à 100 cSt. Lorsqu'un remplacement est effectué, ces gammes s'appliquent au lubrifiant initial et/ou au lubrifiant de remplacement. Lorsqu'un remplacement est effectué, de préférence le HFC-134a est utilisé en tant que fluide frigorigène initial.

Dans certains modes de réalisation, le procédé de transfert de chaleur est un procédé de climatisation ou de réfrigération pour local industriel ou commercial, et le compresseur utilisé est un compresseur scroll ; dans un tel cas la viscosité du lubrifiant est de préférence de 5 à 250 cSt, de préférence encore de 10 à 200 cSt, et de préférence encore de 20 à 150 cSt. Lorsqu'un remplacement est effectué, ces gammes s'appliquent au lubrifiant initial et/ou au lubrifiant de remplacement. Lorsqu'un remplacement est effectué, de préférence le HFC-134a est utilisé en tant que fluide frigorigène initial.

Dans certains modes de réalisation de l'invention, lorsqu'un remplacement est effectué, le lubrifiant de remplacement est différent du lubrifiant initial, et la viscosité du lubrifiant de remplacement est inférieure à celle du lubrifiant initial. Il est préféré qu'à la fois le lubrifiant initial et le lubrifiant de remplacement soient des lubrifiants POE tels que décrits ci-dessus.

La viscosité du lubrifiant de remplacement (en cSt) peut être ainsi inférieure de 1 à 2 % ; ou de 2 à 3 % ; ou de 3 à 4 %, ou de 4 à 5 % ; ou de 5 à 10 % ; ou de 10 à 15 % ; ou de 15 à 20 % ; ou de 20 à 25 % ; ou de 25 à 30 % ; ou de 30 à 40 % ; ou de 40 à 50 % ; ou de plus de 50 % ; par rapport à la viscosité du lubrifiant initial (en cSt).

La différence entre la viscosité du lubrifiant de remplacement et la viscosité du lubrifiant initial peut par exemple valoir de 1 à 2 cSt ; ou de 2 à 3 cSt ; ou de 3 à 4 cSt ; ou de 4 à 5 cSt ; ou de 5 à 10 cSt ; ou de 10 à 15 cSt ; ou de 15 à 20 cSt ; ou de 20 à 25 cSt ; ou de 25 à 30 cSt ; ou de 30 à 40 cSt ; ou de 40 à 50 cSt ; ou de 50 à 60 cSt ; ou de 60 à 70 cSt ; ou de 70 à 80 cSt ; ou de 80 à 90 cSt ; ou de 90 à 100 cSt ; ou de 100 à 150 cSt ; ou de 150 à 200 cSt ; ou de 200 à 250 cSt ; ou de 250 à 300 cSt ; ou de plus de 300 cSt.

### EXEMPLES

Les exemples suivants illustrent l'invention sans la limiter.

Dans ces exemples, on considère une installation de réfrigération fonctionnant soit avec du HFC-134a, soit avec du HFO-1234yf, soit avec du HFO-1234ze (sous forme trans). Le lubrifiant utilisé est une huile POE ISO 55 ayant une viscosité de 55 cSt à 40°C.

### Exemple 1 - mesure de la solubilité, viscosité et densité.

Des mesures de solubilité sont effectuées selon le protocole suivant.

Le dispositif de mesure de solubilité est composé d'une cellule métallique avec hublot dotée d'une caméra pour visualiser l'intérieur de la cellule. La cellule est aussi dotée de capteurs de pression absolue, de pression différentielle à haute précision, de température et de mesure de viscosité dynamique. Le capteur de mesure de viscosité est immergé dans la phase liquide du mélange testé.

Tous les capteurs sont étalonnés avant les essais afin de pouvoir mesurer la pression, la température, la viscosité et le volume liquide dans la cellule. La densité de la phase liquide est calculée d'après ces mesures.

L'ensemble de la cellule est gardé à température constante grâce à un système de double enveloppe alimenté par un fluide caloporteur à température réglable.

Une quantité déterminée d'huile est introduite dans la cellule. Les premiers essais consistent à mesurer la viscosité de l'huile à différentes températures. Des quantités déterminées de gaz sont introduites progressivement par la suite. Après chaque ajout de gaz, les mesures sont réalisées sur une plage de température déterminée.

La quantité du gaz en phase vapeur dans le ciel de la cellule est calculée grâce aux mesures du niveau de liquide et à la connaissance préalable du comportement du gaz pur en fonction de la température et de la pression.

La quantité maximale de gaz dissoute dans le liquide est calculée en fonction de la masse du gaz chargé et de la masse du ciel gazeux.

### Exemple 2 - détermination de la solubilité dans un système à compression de vapeur à l'entrée du compresseur

On considère une installation à compression de vapeur fonctionnant avec du HFC-134a, du HFO-1234yf ou du HFO-1234ze. Les pressions à l'entrée du compresseur pour chaque fluide sont respectivement de 1,47 bar (HFO-1234ze), 2,0 bar (HFC-134a) et 2.2 bar (HFO-1234yf). Elles correspondent à la pression de saturation vapeur de chaque fluide à -10°C (les pertes de charge étant négligées). Si l'on considère à présent une surchauffe de 10°C ou de 5°C dans l'installation, la température à l'entrée compresseur est respectivement de 0°C ou de -5°C.

La solubilité du mélange huile/réfrigérant à l'entrée du compresseur est donc fonction de la pression de fonctionnement pour chaque fluide réfrigérant et de la température à l'entrée du compresseur.

On a représenté sur les **figures 1** et **2** les courbes de pression en fonction de la température, à solubilité constante, pour le HFO-1234yf, le HFO-1234ze et le HFC-134a.

Ces courbes ont été obtenues par modélisation à partir des résultats de mesure de l'exemple 1, en utilisant la méthodologie suivante : la viscosité, la pression et la densité sont exprimées sous forme d'équations, en fonction de la température et de la solubilité. Chaque équation a un nombre de constantes à déterminer par régression en fonction des résultats des mesures ci-dessus. L'équation de la viscosité est une forme modifiée de l'équation de Walther, à neuf constantes. L'équation de la pression est aussi à neuf constantes. Ces deux équations sont décrites dans le document Solubility, viscosity and density of refrigerant/lubricant mixtures de David R. Henderson (Spauschus Associates, Inc. 300 Corporate Center Court Eagle's Landing Stockbridge, GA 30281, April 1994) en page 3. L'équation de la densité est une équation linéaire en fonction de la solubilité (x) et de la température (t) avec quatre constantes à régresser suivant les résultats des mesures (densité = a + bt + cx + dxt avec a, b, c, d constante). Ainsi, pour déterminer l'un des paramètres (température ou pression, densité ou viscosité ou solubilité), il suffit de résoudre un système d'équations à plusieurs inconnues.

Les mélanges d'huile et de fluide frigorigène illustrés contiennent 22 % de HFC-134a (courbe A), 15 % de HFO-1234yf (courbe B), 23,8 % de HFO-1234ze (courbe C), avec une surchauffe de 10°C dans l'installation ; ou 26 % de HFC-134a (courbe D), 18,5 % de HFO-1234yf (courbe E) et 27,6 % de HFO-1234ze (courbe F) avec une surchauffe de 5°C dans l'installation.

Ainsi, si l'on remplace le HFC-134a par du HFO 1234yf, la solubilité du fluide frigorigène est réduite, même en réduisant la surchauffe de 10°C à 5°C. Ce n'est pas le cas avec le HFO 1234ze.

### Exemple 3 - détermination de la viscosité dans un système de compression de vapeur à l'entrée du compresseur

Avec le dispositif de mesure décrit à l'exemple 1, des mesures de viscosité dynamique de différents mélanges ont été effectuées. La viscosité cinématique est calculée d'après les mesures de la viscosité dynamique et de la densité.

Si on considère le même système de l'exemple 2, La viscosité cinématique du mélange fluide frigorigène / huile à une température de 0°C et aux pressions de fonctionnement correspondantes (correspondant à une température d'évaporation de -10°C et 10°C de surchauffe) est de 44 cSt avec le HFC-134a et de 79 cSt avec le HFO-1234yf. Elle est de 45,18 cSt avec le HFO-1234ze

La viscosité cinématique du mélange fluide frigorigène / huile à une température de -5°C et aux pressions de fonctionnement correspondantes (correspondant à une température d'évaporation de -10°C et 5°C de surchauffe) est de 38,6 cSt avec le HFC-134a et de 69 cSt avec le HFO-1234yf. Elle est de 40,3 cSt avec le HFO-1234ze.

Ainsi, même en réduisant la surchauffe, le mélange huile / HFO-1234yf conserve une viscosité élevée par rapport à la référence avec le HFC-134a.

Sur la **figure 3****,** on a représenté la viscosité cinématique en fonction de la température à pression constante pour chaque fluide réfrigérant dans les conditions de pression de l'exemple 2. La courbe repérée par une étoile (*) correspond à l'huile seule. Ces courbes sont résultats de la modélisation des points de mesures discutée ci-dessus.

On constate que le HFO-1234yf présente un comportement en viscosité nettement distinct de celui du HFC-134a et de celui du HFO-1234ze quand la température du mélange est inférieure à 40°C.

Le tableau ci-dessous résume les résultats obtenus :

| **Fluide frigorigène** | HFC-134a | HFC-134a | HFO-1234yf | HFO-1234yf | HFO-1234ze | HFO-1234ze |
|---|---|---|---|---|---|---|
| **Pression de saturation (bar)** | 2 | 2 | 2,2 | 2,2 | 1,47 | 1,47 |
| **Température entrée compresseur** | 0°C | -5°C | 0°C | -5°C | 0°C | -5°C |
| **Surchauffe** | 10°C | 5°C | 10°C | 5°C | 10°C | 5°C |
| **Température minimale de l'huile** | 0°C | -5°C | 0°C | -5°C | 0°C | -5°C |
| **Solubilité** | 22 % | 26 % | 15% | 18,5 % | 23,8 % | 27,6 % |
| **Viscosité (mm²/s)** | 44 | 38,6 | 79 | 69 | 45,2 | 40,3 |

### Exemple 4 - performances

Une analyse des performances d'une installation fonctionnant avec une température de condensation de 40°C, une température d'évaporation de -10°C en évaporation, 7°C de sous-refroidissement et une surchauffe variable de 3°C à 10°C a été effectuée comme suit. Les propriétés thermodynamiques ont été calculées à l'aide du logiciel Refprop.

Les résultats sont présentés dans le tableau ci-dessous :

| | **Pₘₐₓ (bar)** | **Pₘᵢₙ (bar)** | **Rapport Pₘₐₓ/Pₘᵢₙ** | **Surch. (°C)** | **RI** | **% CAP** | **% COP** |
|---|---|---|---|---|---|---|---|
| HFC-134a | 10,2 | 2,0 | 5,07 | 10,0 | 77 | 100 | 100 |
| H FO-1234ze | 7,7 | 1,5 | 5,20 | 10,0 | 77 | 73 | 99 |
| HFO-1234yf | 10,2 | 2,2 | 4,59 | 10,0 | 79 | 95 | 97 |
| HFO-1234yf | 10,2 | 2,2 | 4,59 | 9,0 | 79 | 96 | 98 |
| HFO-1234yf | 10,2 | 2,2 | 4,59 | 8,0 | 79 | 96 | 98 |
| HFO-1234yf | 10,2 | 2,2 | 4,59 | 7,0 | 79 | 97 | 99 |
| HFO-1234yf | 10,2 | 2,2 | 4,59 | 6,0 | 79 | 97 | 99 |
| HFO-1234yf | 10,2 | 2,2 | 4,59 | 5,0 | 79 | 98 | 100 |
| HFO-1234yf | 10,2 | 2,2 | 4,59 | 4,0 | 79 | 98 | 100 |
| HFO-1234yf | 10,2 | 2,2 | 4,59 | 3,0 | 79 | 99 | 101 |

Dans ce tableau, Pₘₐₓ et Pₘᵢₙ désignent les pressions maximale et minimale dans le système, Surch. désigne la surchauffe, RI désigne le rendement isentropique, CAP désigne la capacité volumétrique, COP désigne le coefficient de performance.

Ces résultats démontrent que le coefficient de performance (COP) et la capacité volumétrique augmentent avec la baisse de la surchauffe. Ainsi, le passage d'une surchauffe de 10°C à 5°C augmente le COP de 3 % et la capacité de 2 %.

Selon l'invention, la baisse de surchauffe à l'entrée du compresseur est possible grâce à la faible solubilité du HFO-1234yf avec les huiles POE par rapport au HFC-134a et au HFO-1234ze.

## Revendications

1. Procédé de climatisation ou de réfrigération pour local industriel ou commercial au moyen d'une installation de transfert de chaleur utilisant un compresseur à scroll et contenant une composition de transfert de chaleur, la composition de transfert de chaleur comprenant :
- un fluide frigorigène, qui comprend du 2,3,3,3-tétrafluoropropène,
et
- un lubrifiant ;
dans lequel le lubrifiant comprend un ester de polyol, la solubilité du 2,3,3,3-tétrafluoropropène dans le lubrifiant à 0°C et à une pression absolue de 2,2 bar étant inférieure à la solubilité du 1,1,1,2-tétrafluoroéthane dans le lubrifiant à 0°C et à une pression absolue de 2,0 bar ;
le procédé comprenant les étapes successives :
- d'évaporation d'un fluide frigorigène ;
- de surchauffe du fluide frigorigène de 1 à 10°C;
- de compression du fluide frigorigène.

2. Procédé selon la revendication 1, dans lequel la surchauffe du fluide frigorigène est de 2 à 10°C, de préférence encore de 3 à 5°C.

3. Procédé selon l'une des revendications 1 à 2, dans lequel le lubrifiant comprend un ester de dipentaérythritol.

4. Procédé selon l'une des revendications 1 à 3, dans lequel le lubrifiant présente une viscosité cinématique à 40°C de 10 à 200 cSt, de préférence de 20 à 100 cSt, et de préférence encore de 30 à 80 cSt.

5. Procédé selon l'une des revendications 1 à 4, dans lequel l'évaporation du fluide frigorigène est effectuée à une température moyenne inférieure ou égale à 10°C, de préférence inférieure ou égale à 0°C, de préférence encore inférieure ou égale à -10°C.

6. Procédé selon l'une des revendications 1 à 5, dans lequel l'installation de transfert de chaleur est une installation prévue pour fonctionner avec une composition de transfert de chaleur initiale comprenant :
- un fluide frigorigène initial, et
- un lubrifiant initial,
la composition de transfert de chaleur initiale étant différente de la composition de transfert de chaleur utilisée dans le procédé.

7. Procédé selon l'une des revendications 1 à 5, dans lequel ladite composition de transfert de chaleur est une composition de transfert de chaleur de remplacement, qui est utilisée en remplacement d'une composition de transfert de chaleur initiale comprenant :
- un fluide frigorigène initial, et
- un lubrifiant initial.

8. Procédé selon la revendication 7, dans lequel la surchauffe avec la composition de transfert de chaleur de remplacement est inférieure ou égale à la surchauffe lorsque le même procédé est mis en œuvre avec la composition de transfert de chaleur initiale ; et de préférence la surchauffe avec la composition de transfert de chaleur de remplacement est inférieure d'au moins 2°C, de préférence d'au moins 5°C, de préférence encore d'au moins 10°C, par rapport à la surchauffe lorsque le même procédé est mis en œuvre avec la composition de transfert de chaleur initiale.

9. Procédé selon la revendication 7 ou 8, dans lequel le lubrifiant de la composition de transfert de chaleur de remplacement est identique au lubrifiant initial.

10. Procédé selon la revendication 7 ou 8, dans lequel le lubrifiant de la composition de transfert de chaleur de remplacement est différent du lubrifiant initial.

11. Procédé selon la revendication 10, dans lequel le lubrifiant de la composition de transfert de chaleur de remplacement a une viscosité cinématique à 40°C inférieure ou égale à la viscosité cinématique à 40°C du lubrifiant initial, la différence entre la viscosité cinématique à 40°C du lubrifiant initial et la viscosité cinématique à 40°C du lubrifiant de la composition de transfert de chaleur de remplacement étant de préférence supérieure ou égale à 5 cSt, de préférence encore supérieure ou égale à 10 cSt.

12. Procédé selon l'une des revendications 7 à 11, dans lequel le lubrifiant initial comprend un ester de polyol, et de préférence comprend un ester de dipentaérythritol.

13. Procédé selon l'une des revendications 6 à 12, dans lequel le fluide frigorigène initial comprend du 1,1,1,2-tetrafluoroéthane ou consiste essentiellement en du 1,1,1,2-tetrafluoroéthane.

## Patentansprüche

1. Klimatisierungs- oder Kühlverfahren für Industrie- oder Geschäftsräume mittels einer Wärmeübertragungsanlage, bei der ein Scrollverdichter verwendet wird und die eine Wärmeübertragungszusammensetzung enthält, wobei die Wärmeübertragungszusammensetzung Folgendes umfasst:
- ein 2,3,3,3-Tetrafluorpropen umfassendes Kältemittel und
- ein Schmiermittel;
wobei das Schmiermittel einen Polyolester umfasst, die Löslichkeit von 2,3,3,3-Tetrafluorpropen im Schmiermittel bei 0 °C und bei einem absoluten Druck von 2,2 bar geringer als die Löslichkeit von 1,1,1,2-Tetrafluorethan im Schmiermittel bei 0 °C und bei einem absoluten Druck von 2,0 bar ist;
wobei das Verfahren die folgenden aufeinanderfolgenden Schritte umfasst:
- das Verdampfen eines Kältemittels;
- das Überhitzen des Kältemittels um 1 bis 10 °C;
- das Komprimieren des Kältemittels.

2. Verfahren nach Anspruch 1, wobei das Überhitzen des Kältemittels von 2 bis 10 °C, noch mehr bevorzugt von 3 bis 5 °C, beträgt.

3. Verfahren nach einem der Ansprüche 1 bis 2, wobei das Schmiermittel einen Dipentaerythritester umfasst.

4. Verfahren nach einem der Ansprüche 1 bis 3, wobei das Schmiermittel eine kinematische Viskosität bei 40 °C von 10 bis 200 cSt, vorzugsweise von 20 bis 100 cSt und noch mehr bevorzugt von 30 bis 80 cSt aufweist.

5. Verfahren nach einem der Ansprüche 1 bis 4, wobei das Verdampfen des Kältemittels bei einer mittleren Temperatur unterhalb von oder gleich 10 °C, vorzugsweise unterhalb von oder gleich 0 °C, noch mehr bevorzugt unterhalb von oder gleich -10 °C, erfolgt.

6. Verfahren nach einem der Ansprüche 1 bis 5, wobei es sich bei der Wärmeübertragungsanlage um eine Anlage handelt, die zum Betrieb mit einer ursprünglichen Wärmeübertragungszusammensetzung vorgesehen ist, die Folgendes umfasst:
- ein ursprüngliches Kältemittel und
- ein ursprüngliches Schmiermittel,
wobei die ursprüngliche Wärmeübertragungszusammensetzung von der beim Verfahren verwendeten Wärmeübertragungszusammensetzung verschieden ist.

7. Verfahren nach einem der Ansprüche 1 bis 5, wobei es sich bei der Wärmeübertragungszusammensetzung um eine Ersatz-Wärmeübertragungszusammensetzung handelt, die als Ersatz einer ursprünglichen Wärmeübertragungszusammensetzung vorgesehen ist, die Folgendes umfasst:
- ein ursprüngliches Kältemittel und
- ein ursprüngliches Schmiermittel.

8. Verfahren nach Anspruch 7, wobei das Überhitzen mit der Ersatz-Wärmeübertragungszusammensetzung geringer als oder gleich dem Überhitzen ist, wenn dasselbe Verfahren mit der ursprünglichen Wärmeübertragungszusammensetzung durchgeführt wird; und das Überhitzen mit der Ersatz-Wärmeübertragungszusammensetzung vorzugsweise um mindestens 2 °C, vorzugsweise mindestens 5 °C, noch mehr bevorzugt 10 °C geringer ist, bezogen auf das Überhitzen, wenn dasselbe Verfahren mit der ursprünglichen Wärmeübertragungszusammensetzung durchgeführt wird.

9. Verfahren nach Anspruch 7 oder 8, wobei das Schmiermittel der Ersatz-Wärmeübertragungszusammensetzung mit dem ursprünglichen Schmiermittel identisch ist.

10. Verfahren nach Anspruch 7 oder 8, wobei das Schmiermittel der Ersatz-Wärmeübertragungszusammensetzung vom ursprünglichen Schmiermittel verschieden ist.

11. Verfahren nach Anspruch 10, wobei das Schmiermittel der Ersatz-Wärmeübertragungszusammensetzung eine kinematische Viskosität bei 40 °C aufweist, die niedriger als oder gleich der kinematischen Viskosität bei 40 °C des ursprünglichen Schmiermittels ist, wobei der Unterschied zwischen der kinematischen Viskosität bei 40 °C des ursprünglichen Schmiermittels und der kinematischen Viskosität bei 40 °C der Ersatz-Wärmeübertragungszusammensetzung vorzugsweise größer als oder gleich 5 cSt, noch mehr bevorzugt größer oder gleich 10 cSt, ist.

12. Verfahren nach einem der Ansprüche 7 bis 11, wobei das ursprüngliche Schmiermittel einen Polyolester und vorzugsweise einen Dipentaerythritester umfasst.

13. Verfahren nach einem der Ansprüche 6 bis 12, wobei das ursprüngliche Kältemittel 1,1,1,2-Tetrafluorethan umfasst oder im Wesentlichen aus 1,1,1,2-Tetrafluorethan besteht.

## Claims

1. Process for air conditioning or refrigeration for industrial or commercial premises by means of a heat transfer installation using a scroll compressor and containing a heat transfer composition, the heat transfer composition comprising:
- a refrigerant fluid which comprises 2,3,3,3-tetrafluoropropene, and
- a lubricant;
in which the lubricant comprises a polyol ester, the solubility of the 2, 3, 3, 3-tetrafluoropropene in the lubricant at 0°C and at an absolute pressure of 2.2 bar being less than the solubility of 1,1,1,2-tetrafluoroethane in the lubricant at 0°C and at an absolute pressure of 2.0 bar;
the process comprising the successive steps:
- of evaporating a refrigerant fluid;
- of superheating the refrigerant fluid from 1 to 10°C;
- of compressing the refrigerant fluid.

2. Process according to Claim 1, in which the superheating of the refrigerant fluid is from 2 to 10°C, more preferably from 3 to 5°C.

3. Process according to either of Claims 1 and 2, in which the lubricant comprises a dipentaerythritol ester.

4. Process according to one of Claims 1 to 3, in which the lubricant has a kinematic viscosity at 40°C of 10 to 200 cSt, preferably of 20 to 100 cSt and more preferably of 30 to 80 cSt.

5. Process according to one of Claims 1 to 4, in which the refrigerant fluid is evaporated at an average temperature of less than or equal to 10°C, preferably less than or equal to 0°C, more preferably less than or equal to -10°C.

6. Process according to one of Claims 1 to 5, in which the heat transfer installation is an installation intended to operate with an initial heat transfer composition comprising:
- an initial refrigerant fluid, and
- an initial lubricant,
the initial heat transfer composition being different from the heat transfer composition used in the process.

7. Process according to one of Claims 1 to 5, in which said heat transfer composition is a replacement heat transfer composition, which is used as replacement for an initial heat transfer composition comprising:
- an initial refrigerant fluid, and
- an initial lubricant.

8. Process according to Claim 7, in which the superheating with the replacement heat transfer composition is less than or equal to the superheating when the same process is implemented with the initial heat transfer composition; and preferably the superheating with the replacement heat transfer composition is less by at least 2°C, preferably by at least 5°C, more preferably by at least 10°C, relative to the superheating when the same process is implemented with the initial heat transfer composition.

9. Process according to Claim 7 or 8, in which the lubricant of the replacement heat transfer composition is identical to the initial lubricant.

10. Process according to Claim 7 or 8, in which the lubricant of the replacement heat transfer composition is different from the initial lubricant.

11. Process according to Claim 10, in which the lubricant of the replacement heat transfer composition has a kinematic viscosity at 40°C which is less than or equal to the kinematic viscosity at 40°C of the initial lubricant, the difference between the kinematic viscosity at 40°C of the initial lubricant and the kinematic viscosity at 40°C of the lubricant of the replacement heat transfer composition being preferably greater than or equal to 5 cSt, more preferably greater than or equal to 10 cSt.

12. Process according to one of Claims 7 to 11, in which the initial lubricant comprises a polyol ester, and preferably comprises a dipentaerythritol ester.

13. Process according to one of Claims 6 to 12, in which the initial refrigerant fluid comprises 1,1,1,2-tetrafluoroethane or consists essentially of 1,1,1,2-tetrafluoroethane.
